# EUROPÄISCHE PATENTSCHRIFT

(11) **EP 2 986 197 B1**
(45) Veröffentlichungstag und Bekanntmachung des Hinweises auf die Patenterteilung: **21.02.2018**
(21) Anmeldenummer: 14716349.7
(22) Anmeldetag: 10.04.2014
(51) Int. Cl.: F21W 131/30, F21V 33/00, A47L 15/42, F21V 8/00

(54) **GESCHIRRSPÜLMASCHINE MIT ZUMINDEST ZWEI LEUCHTFLÄCHENELEMENTEN**
DISHWASHER HAVING AT LEAST TWO LUMINOUS SURFACE ELEMENTS
LAVE-VAISSELLE DOTÉ D'AU MOINS DEUX BANDEAUX LUMINEUX

(30) Priorität: 16.04.2013 DE 102013206865
(43) Veröffentlichungstag der Anmeldung: 24.02.2016
(73) Patentinhaber: BSH Hausgeräte GmbH, 81739 München (DE)
(72) Erfinder: GLEIXNER, Marco, 89429 Bachhagel (DE); KIECHLE, Franz, 89312 Günzburg (DE); REHM, Karlheinz, 89561 Dischingen (DE)
(86) Internationale Anmeldenummer: PCT/EP2014/057271
(87) Internationale Veröffentlichungsnummer: WO 2014/170202

(56) Entgegenhaltungen:
- US-A- 5 836 669
- US-A1- 2004 042 196
- US-A1- 2010 218 793

## Beschreibung

Die Erfindung betrifft eine Geschirrspülmaschine mit einem von einem Spülbehälter umschlossenen Spülraum, in dem Spülgut vorzugsweise bei erhöhter Temperatur und unter Einsatz von, insbesondere mit Chemikalien wie z.B. Reinigungsmittel oder Klarspülmittel versetzter, Spülflüssigkeit, bevorzugt Wasser gereinigt wird. Allgemein herrschen in einem Spülraum Bedingungen vor, die von jenen der normalen Umgebung hinsichtlich, Temperatur, Feuchtigkeit, etc. teils erheblich abweichen. Im Spülbetrieb der Geschirrspülmaschine, während dem die Beladeöffnung deren Spülbehälters zweckmäßigerweise durch eine Tür geschlossen ist, wird im Spülraums Spülflüssigkeit mittels ein oder mehrerer Sprüheinrichtungen versprüht. Der Spülraum wird dabei also nass. Im Spülraum sind vorzugsweise ein oder mehrere Beladeeinheiten wie z.B. Geschirrkörbe und/oder Besteckschubladen untergebracht, die der Aufnahme von zu reinigendem Spülgut dienen.

Um die Beleuchtungsverhältnisse zu verbessern, ist vielfach ein elektrisches Leuchtmittel im Spülraum vorgesehen, was aber zum einen eine Abschirmung gegenüber den im Spülraum herrschenden Bedingungen und außerdem eine Durchführung von ein oder mehreren elektrischen Stromleitungen durch eine den Spülraum begrenzende Wand erforderlich macht. Nachteilig ist auch, dass solche Leuchtmittel oftmals störend sind, weil sie den Nutzraum des Spülraums verringern und nur eine unzureichende Ausleuchtung des Spülraums bewirken. Außerdem können die Leuchtmittel vielfach nur so positioniert werden, dass sie den Benutzer blenden, wenn dieser den Spülraum be- oder entlädt.

Die Geschirrspülmaschine der US 2010/0218793 A1 sieht z.B. entsprechend deren Figur 2 lediglich zwei winzige Durchbrüche in der Deckenwand ihres Spülbehälters vor, in die jeweils eine Halterung mit einer punktuellen Lichtquelle wie z.B. LED eingesetzt ist.

Aufgabe der Erfindung ist es, eine Geschirrspülmaschine mit einer verbesserten Beleuchtung bzw. Illuminierung deren Spülraums bereitzustellen.

Diese Aufgabe wird gemäß den Merkmalen des Anspruchs 1 gelöst. Dabei weist mindestens eine der Wände des Spülraums, insbesondere dessen Rückwand, zumindest zwei jeweils von einem Leuchtflächenelement überdeckte oder verschlossene Durchbrüche bzw. Durchbrechungen und einen die Durchbrüche voneinander trennenden Versteifungssteg auf, wobei die Leuchtflächenelemente jeweils eine Gesamtfläche aufweisen, die mindestens 20 %, insbesondere zwischen 50% und 95%, der Wandfläche entspricht.

Durch diese Ausgestaltung wird eine großflächige, d.h. ausgedehnte Illuminationsregion bereitgestellt, die gegenüber einer bisherigen, punktförmig ausgebildeten Lichtquelle, die zusätzlich auf einer Seitenwand des Spülraums in diesen abstehend angebracht ist, eine verbesserte, insbesondere eine blendfreie, wenig Schattenwurf erzeugende und gleichmäßige Ausleuchtung des Spülraums, aber auch zusätzlich oder unabhängig hiervon eine Vielzahl von Illuminationswirkungen, Lichtdesigns bzw. Lichtgestaltungen ermöglicht. Gleichzeitig wird vermieden, dass das gegebene Raumvolumen des Spülraums wie bisher durch das in den Spülraum vorstehende Gehäuse einer punktuellen, an eine Seitenwand des Spülraums angebrachten Lichtquelle gestört, insbesondere verkleinert, wird.

Zu den Wänden des Spülraums zählt im Rahmen der Erfindung insbesondere auch die Innenwand der Tür, die in deren Schließendstellung dem Spülraum zugewandt ist. Auch diese Türinnenwand kann nach dem erfindungsgemäßen Konstruktionsprinzip insgesamt oder teilweise als Leuchtflächenelement ausgebildet sein. Somit ist der Spülraum der im Spülbetrieb durch Spülflüssigkeit nass werdende Behandlungsraum der Geschirrspülmaschine, in dem zu reinigendes Spülgut zur Beaufschlagung mit Spülflüssigkeit unterbringbar ist. Der Spülraum ist von Wänden des Spülbehälters und der Innenwand, d.h. der sogenannten Innentür der Tür, vorzugsweise weitgehend flüssigkeitsdicht, umschlossen, wenn die Tür die Beladeöffnung des Spülbehälters, insbesondere z.B. für den Spülbetrieb der Geschirrspülmaschine, verschließt.

Eine Wand kann auf die vorgeschlagene Weise nahezu vollständig als Leuchtregion gestaltet werden, wobei jedoch stets zwischen den zwei Leuchtelementen der Versteifungssteg, der vorzugsweise einstückig mit dem Spülbehälter bzw. der Wand ausgebildet ist, vorhanden ist und eine Aussteifung des jeweiligen Wandbereichs bzw. des Spülbehälters nach Art einer Fachwerkkonstruktion gewährleistet, so dass ein gegebenenfalls von den beispielsweise plattenförmig ausgebildeten Leuchtflächenelementen zu leistender Beitrag zur Stabilität des Spülbehälters reduziert werden kann. Außerdem ist auch bei einem weitgehenden Ersatz der Wand durch Leuchtflächenelemente auf konstruktiv einfache Weise und ohne Einschränkung des Platzangebots im Spülraum dessen Illumination sichergestellt. Mit Hilfe der in Rede stehenden großflächigen Leuchtregion lässt sich, wenn diese besonders bevorzugt an der Rückwand vorgesehen ist, vor allem der hintere, von der frontseitigen Tür abgewandte, bisher meist im Dunkeln liegende Bereich des Spülraums ausreichend ausleuchten. Dies verbessert die Ergonomie und den Komfort für einen Nutzer des Haushaltsgeräts.

Der von den Leuchtelementen flankierte Versteifungssteg hat neben seinem stabilisierenden Einfluss den Vorteil, dass er eine Montagefläche für innerhalb des Spülraums vorgesehene Funktionselemente bietet. So kann ein an der Rückwand vertikal verlaufender Versteifungssteg beispielsweise zum Anbringen einer oder mehrerer Leitungen zur Wasserzufuhr zu einer an der Deckenwand angeordneten Sprüheinrichtung, insbesondere zu einer dort vorgesehenen Dachbrause oder einem dort rotierbar angebrachten Sprüharm, und/oder zu einer an der Rückwand optional zu montierenden Sprüheinrichtung, insbesondere zu einem dort rotierbar angebrachten Sprüharm dienen. Die dem Spülraum abgewandte Seite des Versteifungsstegs lässt sich ebenfalls zur Montage von Bauteilen, beispielsweise ebenfalls einer Zuführleitung für einen Sprüharm oder von Schläuchen nutzen.

Mit anderen Worten und verallgemeinernd ausgedrückt weist eine erfindungsgemäße Geschirrspülmaschine einen im Spülbetrieb flüssigkeitsbeaufschlagten Spülraum auf, der von mehreren Wänden eines Spülbehälters und von der Innenwand einer Tür umgrenzt ist. Wenigstens zwei Durchbrüche in mindestens einer der Wände, insbesondere in der Rückwand, des Spülbehälters, sind jeweils von wenigstens einem Illuminationselement überdeckt oder verschlossen, das mindestens ein Leuchtflächenelement und wenigstens ein diesem beigeordnetes transparentes, transluzentes oder reflektierendes Flächenelement umfasst.

Ein Leuchtflächenelement lässt sich zwar prinzipiell so gestalten, dass es neben seiner Leuchtfunktion weitere Funktionen erfüllt, beispielsweise die Steifigkeit und mechanische Festigkeit der jeweiligen Wand erhöht, resistent gegenüber den während des Reinigungsbetriebs bzw. Spülbetriebs im Spülraum herrschenden Bedingungen ist, oder reflektierende Eigenschaften aufweist, um möglichst das gesamte in ein Leuchtflächenelement eingekoppelte oder von diesem erzeugte Licht zur Ausleuchtung des Spülraums ausnutzen zu können. Eine derartige Multifunktionalität lässt sich vielfach nur mit Hilfe von marktunüblichen und daher teuren Spezialentwicklungen verwirklichen. Erfindungsgemäß wird hier der Weg beschritten, Funktionen der o.g. Art mit Hilfe wenigstens eines separaten transparenten, transluzenten oder reflektierenden Flächenelements zu verwirklichen, d.h. diese Funktionen von den Leuchtflächenelementen abzukoppeln. Auf diese Weise ist es möglich, das jeweilige Leuchtflächenelement ausschließlich hinsichtlich seiner optischen Eigenschaften auszuwählen, wobei Funktionalitäten wie etwa eine Versteifung der das Leuchtflächenelement aufweisenden Wand nicht beachtet werden müssen. So kann etwa eine Aussteifung der Wand durch eine auf der dem Spülbehälter zugewandten Seite des Leuchtflächenelements angeordnete Vorsatzplatte, wie weiter unten noch erläutert wird, verwirklicht werden.

Insbesondere kann es in Verallgemeinerung der vorstehenden spezifischen Konstruktion zweckmäßig sein, wenn die jeweilige Wand mehr als zwei Durchbrüche aufweist, die von jeweils einem Leuchtflächenelement überdeckt oder verschlossen sind. Zwischen je zwei benachbarten Durchbrüchen ist dann jeweils ein Versteifungssteg der Wand vorgesehen. Vorteilhaft kann es z.B. sein, wenn in Breitenrichtung der Wand betrachtet eine Reihe von mindestens zwei Durchbrüchen mit zugehörigen, diese überdeckenden oder verschließenden Illuminationselementen vorgesehen ist, und/oder wenn in Höhenrichtung der Wand betrachtet eine Reihe von mindestens zwei Durchbrüchen mit zugehörigen, diese überdeckenden oder verschließenden Illuminationselementen vorgesehen ist. Dies ermöglicht ein Wand- Beleuchtungsfeld, das sich aus einer Vielzahl von Durchbrüchen mit diese überdeckenden oder verschließenden Leuchtelementen zusammensetzt. Es ist aufgrund der verbleibenden Versteifungsstege zwischen je zwei Durchbrüchen der Wand ausreichend stabil und eigensteif. So kann beispielsweise ein Beleuchtungsfeld einer Wand dadurch gebildet sein, dass in Breitenrichtung der Wand nebeneinander zwei Reihen von je drei übereinander angeordneten Durchbrüchen vorgesehen sind, die jeweils mit einem Leuchtelement überdeckt oder verschlossen sind, d.h. die Wand weist insgesamt sechs Durchbrüche mit jeweils zugehörigem Leuchtelement auf.

Zur Fixierung der Leuchtflächenelemente an einer Wand und zu deren Ausgestaltung gibt es unterschiedliche konstruktive Möglichkeiten. Vorzugsweise ist vorgesehen, dass die Leuchtflächenelemente jeweils mittel- oder unmittelbar an einem die Durchbrüche umgrenzenden, einen Fixierflansch bildenden Rand einer Wand fixiert sind. Dies lässt sich auf herstellungstechnisch einfache Weise dadurch realisieren, dass in einem zunächst mit geschlossenen Wänden hergestellten Spülbehälter die Wanddurchbrüche durch einen Stanzvorgang erzeugt werden. Die stehenbleibenden Bereiche der Wand bilden dann den Versteifungssteg und die Fixierflansche.

Dadurch, dass das Leuchtflächenelement den Rand bzw. den Fixierflansch überlappt, lässt sich in einfacher Weise eine mechanisch einwandfreie und/oder flüssigkeitsdichte Verbindung zwischen dem Leuchtflächenelement im Durchbruch der jeweiligen Wandung oder in der Lücke zwischen benachbarten Wandungen herstellen. Vorteilhaft ist insbesondere, dass die Montage des Leuchtflächenelements von der Außenseite des Spülbehälters her erfolgen kann, so dass Befestigungs- und/oder Abdichtmittel im Spülraum unsichtbar bleiben und nicht stören. Insbesondere ist weitgehend vermieden, dass sie den Chemikalien im Spülraum wie z.B. einer Reinigungslauge direkt ausgesetzt sind, was ansonsten zu Schädigungen der Befestigungs- und/oder Abdichtmittel führen könnte. Dadurch ist die Langlebigkeit der Konstruktion sichergestellt.

Die Steifigkeit bzw. Stabilität der Wand bzw. des Spülbehälters kann nach einer vorteilhaften Weiterbildung der Erfindung noch dadurch gesteigert werden, dass der Fixierflansch in einer Ebene verläuft, die gegenüber der Wandebene bzw. gegenüber sich den Fixierflansch umgreifenden Wandbereichen in Wandquerrichtung, insbesondere in Normalenrichtung der Wand, versetzt ist. Mit anderen Worten ist zweckmäßigerweise ein den Fixierflansch beinhaltender Randbereich der Wand so vom Spülraum weg oder zum Spülraum hin gebogen, dass eine Stufe entsteht bzw. der Randbereich wie ein Winkelprofil ausgebildet ist, dessen endständiger, die Durchbrechung umgrenzender Schenkel der Fixierflansch ist und dessen anderer Schenkel sich im Wesentlichen in Wandquerrichtung erstreckt. Die Wandbereiche und der Versteifungssteg sind dadurch nicht mehr bloße Blech-Flachteile, sondern sind profiliert, was ihre Stabilität und Verwindungssteifigkeit erhöht. Durch diese Ausgestaltung ist die Stabilität der von den Durchbrüchen durchsetzten Wandbereiche und des Versteifungsstegs erhöht.

Der in Rede stehende Versatz des Fixierflansches, insbesondere in Richtung zum Spülraum, hat noch den Vorteil, dass dadurch eine Vertiefung bzw. Ausnehmung in den Durchbruch umgebenden Wandbereichen, insbesondere außenseitig, gebildet wird, welche ein Leuchtflächenelement und gegebenenfalls weitere Bauteile, etwa die Durchbrechung überdeckende, z.B. zum Schutz des Leuchtflächenelements dienende Flächenelemente, also Platten und Folien, aufnehmen kann.

Zweckmäßigerweise ersetzen, d.h. substituieren die Leuchtflächenelemente mindestens 50 %, insbesondere mindestens 75 %, bevorzugt zwischen 80 % und 95 %, der Gesamtfläche mindestens einer Wand, die den Spülraum begrenzt. Dadurch kann diese zum überwiegenden Teil oder ganz ausgetauschte Begrenzungswand an sich ein großflächiges, ausgedehntes Lichtobjekt bilden, das leuchtet. Sie ist heller als die übrigen Wände des Spülraums, die nicht durch ein Leuchtflächenelement ersetzt sind. Dies ermöglicht insbesondere eine Vielzahl interessanter Lichtgestaltungsmöglichkeiten. Zusätzlich oder unabhängig hiervon lassen sich im Vergleich zu einer nur punktförmigen Lichtquelle größere Volumen bereiche im Spülraum als bisher einwandfrei, insbesondere homogener ausleuchten.

Erfindungsgemäß ist das Leuchtflächenelement durch ein plattenförmiges oder paneelartiges Element gebildet. Dadurch lässt es sich als konstruktiv einfaches Bauteil herstellen, was in der Massenfertigung von Geschirrspülmaschinen vorteilhaft ist. Zudem ermöglicht es in einfacher Weise den Zusammenbau mit anderen Wandteilen zu einem Spülbehälter. So kann beispielsweise ein eine frontseitige, etwa rechteckförmige Beschickungsöffnung bzw. Beladeöffnung aufweisender Spülbehälter für eine Geschirrspülmaschine aus zwei Seitenwandteilen, einem Deckenwandteil, einem Bodenwandteil und einem Leuchtflächenelement als Rückwandteil montagetechnisch einfach zusammengesetzt werden. Die plattenförmige oder paneelenartige Geometrieform des Leuchtflächenelements erlaubt es ferner, dass es aus einem Glasmaterial und/oder Kunststoffmaterial fertigungstechnisch einfach herstellbar ist

Insbesondere kann es zweckmäßig sein, wenn das Leuchtflächenelement zumindest auf seiner dem Spülraum zugewandten Innenwandfläche weitgehend planflächig, insbesondere glattflächig, ausgebildet ist. Dadurch ist zum einen das Anhaften von Schmutzteilchen am Leuchtflächenelement gegenüber dem Fall ohne Planflächigkeit, insbesondere Glattflächigkeit des Leuchtflächenelements reduziert oder weitgehend vermieden, d.h. dieses bleibt weitgehend sauber. Zum anderen kann das Leuchtflächenelement in einfacher Weise gereinigt werden, falls es doch einmal schmutzig wird. Diese planflächige, insbesondere glattflächige Ausbildung des Leuchtflächenelements ist insbesondere bei einer Geschirrspülmaschine günstig, wenn mindestens eine Wand wie z.B. die Rückwand des Spülbehälters gegen ein erfindungsgemäßes Leuchtflächenelement ausgetauscht ist. Schmutzteilchen wie z.B. Speisereste, die von zu reinigendem Gut wie z.B. Geschirrgut und/oder Besteck im Spülbehälter beim Besprühen mit Spülflüssigkeit durch eine oder mehrere Sprüheinrichtungen abgelöst werden, bleiben somit am Leuchtflächenelement weit weniger oder kaum hängen.

Weiterhin kann es vorteilhaft sein, wenn in einer Trennfuge zwischen dem Leuchtflächenelement und dem den Durchbruch umgrenzenden Rand bzw. Fixierflansch mindestens ein Dichtungsmittel vorgesehen ist. Dadurch lässt sich eine ausreichende Dichtigkeit des Spülraums sicherstellen.

Nach einer vorteilhaften Weiterbildung der Erfindung ist das Leuchtflächenelement derart lichtleitend und/oder lichtausstrahlend ausgebildet, dass eine, insbesondere weitgehend homogene, Hintergrundbeleuchtung ("backlight") bereitgestellt ist. Dies ermöglicht insbesondere eine weitgehend blendfreie Illumination und/oder eine ansprechende Lichtgestaltung des Spülraums unter einer Vielzahl von Gegebenheiten. Z.B. lässt sich die Rückwand eines Spülbehälters durch ein als Hintergrundbeleuchtung ausgebildetes Leuchtflächenelement bilden. Dadurch kann fertig gereinigtes Spülgut von hinten, d.h. von der der Beladeöffnung des Spülbehälters abgewandten Seite dessen Innenraums her beleuchtet werden und insbesondere sein Sauberkeitsgrad für einen Nutzer besser sichtbar gemacht werden, wenn dieser die Fronttür der Geschirrspülmaschine nach dem Ende eines abgelaufenen Geschirrspülprogramms öffnet und in den Innenraum des Spülbehälters blickt.

Nach einer weiteren vorteilhaften Weiterbildung der Erfindung ist das Leuchtflächenelement derart lichtleitend und/oder lichtausstrahlend ausgebildet, dass ein oder mehrere Lichtstrahlen wenigstens einer außerhalb des Spülraums angeordneten Lichtquelle in das Leuchtflächenelement an mindestens einer Einkoppelstelle einkoppelbar sind, ein oder mehrere eingekoppelte Lichtstrahlen im Leuchtflächenelement ausgehend von ihrer jeweiligen Einkoppelstelle weg mit einer parallel zur dem Spülraum zugewandten Innenwandfläche des Leuchtflächenelements verlaufenden Fortpflanzungsrichtung ausbreitungsfähig sind, und dass von den ein oder mehreren, sich derart fortpflanzenden Lichtstrahlen, insbesondere quer zu deren Fortpflanzungsrichtung, aus der dem Spülraum zugewandten Innenwandfläche des Leuchtflächenelements ein oder mehrere Lichtstrahlen an ein oder mehreren, von der jeweiligen Einkoppelstelle verschiedenen Auskoppelstellen in den Spülraum hinein auskoppelbar sind, jedoch das Leuchtflächenelement vom Spülraum aus betrachtet weitgehend blickdicht ausgebildet ist. Damit lässt sich Licht weitgehend diffus in den Spülraum abstrahlen, so dass eine Blendung des Nutzers der Geschirrspülmaschine weitgehend vermieden ist, wenn dieser in den Spülraum blickt. Da vom Spülraum aus betrachtet die Außenseite des Leuchtflächenelements nicht nach innen durchscheint, können dort Bauteile und Komponenten des Haushaltsgeräts wie z.B. eine Lichtquelle ohne weiteres angeordnet werden.

Um das Leuchtflächenelement nach Innen in den Spülraum hinein leuchten zu lassen, ist die Lichtquelle zweckmäßigerweise derart ausgebildet und angeordnet, dass von ihr emittierte Lichtstrahlen die vom Spülraum abgewandte Außenwandfläche des Leuchtflächenelements an einer oder mehreren Stellen und/oder wenigstens eine Stirnseite des Leuchtflächenelements beaufschlagen. Dabei kann es günstig sein, wenn mindestens ein optisches Übertragungselement, insbesondere mindestens ein Lichtwellenleiter, einenends mit der Lichtquelle und anderenends mit dem Leuchtflächenelement optisch gekoppelt ist. Dadurch lässt sich die Lichtquelle örtlich an einem anderen Ort als die jeweilige eigentliche Einkoppelstelle im Haushaltsgerät unterbringen. So kann die Lichtquelle bei einer Geschirrspülmaschine beispielsweise in einer Bodenbaugruppe unterhalb des Spülbehälters untergebracht sein und von ihr emittierte Lichtstrahlen über mindestens einen Lichtwellenleiter zu einer oder mehreren Einkoppelstellen an der Außenwand oder Stirnseite des Leuchtflächenelements transportiert werden.

Besonders günstig ist es, wenn das Leuchtflächenelement als großflächiger, d.h. flächig ausgedehnter Lichtleiter ausgebildet ist. Dieser ermöglicht verbessert ein gleichmäßiges Leuchten des Leuchtflächenelements, da Licht an einer Vielzahl von Auskoppelstellen, die gleichmäßig über die Innenwandfläche des Leuchtflächenelements verteilt sind, ausgekoppelt werden kann.

Verallgemeinert ausgedrückt ist das Leuchtflächenelement vorzugsweise derart ausgebildet, dass von ihm Lichtstrahlen diffus in den Spülraum abstrahlbar sind. Dazu weist das Leuchtflächenelement zweckmäßigerweise Extraktoren auf. So kann beispielsweise die Materialschicht des Leuchtflächenelements mit Streu- und/oder Reflexionspartikeln, insbesondere Farbpartikeln versetzt sein. Auf diese Weise kann zumindest die dem Spülraum zugewandte Innenwandfläche des Leuchtflächenelements von außen, insbesondere vom Spülraum her betrachtet weitgehend blickdicht, insbesondere opak wirkend ausgebildet sein.

Ggf. kann es vorteilhaft sein, dass zumindest die dem Spülraum zugewandte Innenwandfläche des Leuchtflächenelements mit mindestens einer vom Schichtinneren des Leuchtflächenelements nach außen lichtdurchlässigen Struktur- oder Partikelschicht, insbesondere Farbschicht versehen ist, die von außen, insbesondere vom Spülraum her betrachtet weitgehend blickdicht, insbesondere opak wirkt. Dadurch lässt sich das Leuchtflächenelement günstig herstellen. Es kann eine Leuchtfunktion und zugleich die Funktion einer herkömmlichen Wand des Spülraums übernehmen, die undurchsichtig ist. So kann bereits eine Kunststoffplatte oder Glasplatte oder eine Verbundplatte dieser Materialien genügen, die auf ihrer dem Spülraum zugewandten Innenwandfläche mit mindestens einer Farbschicht oder sonstigen Struktur- oder Partikelschicht überzogen ist.

Weiterhin kann es günstig sein, wenn das Leuchtflächenelement zumindest auf seiner Innenwandfläche mit wenigstens einer zuoberst außen aufsitzenden, lichtdurchlässigen Schutzschicht versehen ist. Dadurch ist es weitgehend resistent gegen im Spülraum eingesetzten Behandlungsmedien.

Weiterhin kann es ggf. vorteilhaft sein, wenn das Leuchtflächenelement elektro- oder photolumineszent ausgebildet ist. Um ein elektrolumineszentes Leuchtflächenelement zum Leuchten anzuregen, wird dieses vorzugsweise an eine Spannungsquelle angeschlossen, die insbesondere außerhalb des Spülraums, wie z.B. in einer Bodenbaugruppe unterhalb des Spülraums, angeordnet ist. Weiterhin kann als elektrolumineszentes Leuchtflächenelement ggf. auch ein Feld aus organischen Leuchtdioden wie z.B. OLEDs oder anorganischen Leuchtdioden wie z.B. LEDs vorgesehen sein, die jeweils als Flächenstrahler arrangiert sind. Bei Verwendung eines photolumineszenten Leuchtflächenelements kann es für ein ausreichendes Leuchten des Leuchtflächenelements genügen, wenn Licht z.B. von einer vorderseitig im Bereich der Beschickungsöffnung des Spülraums angebrachten Lichtquelle wie z.B. LEDs auf das Leuchtflächenelement fällt. Ggf. kann bereits Licht einer externen Lichtquelle oder Umgebungslicht ausreichend sein, das beim Öffnen der Fronttür des Haushaltsgeräts in dessen Spülraum hineinstrahlt und auf die photolumineszierende Fläche des Leuchtflächenelements trifft.

Durch die erfindungsgemäßen Leuchtflächenelemente kann der Innenraum bzw. Spülraum des Spülbehälters großflächig heller als bisher bei lediglich punktueller Beleuchtung ausgebildet werden. Dies ist besonders günstig, wenn der Spülbehälter mit Spülgut wie z.B. Geschirr und/oder Besteck in einer oder mehreren Beladeeinheiten wie z.B. Geschirrkörben und/oder Besteckschubladen bestückt ist und sein Innenraum deshalb beim Öffnen der Fronttür durch das Spülgut und die Geschirrkörbe stark vom externen Umgebungslicht wie z.B. Küchenlicht abgeschattet bleibt.

Zusammenfassend betrachtet weist die Geschirrspülmaschine einen Spülraum mit zwei lichtleitenden und/oder lichtabstrahlenden Leuchtflächenelementen auf, die eine Wand des Spülraums mindestens zu 20 %, insbesondere zwischen 50% und 95%, ersetzen und die durch einen Versteifungssteg voneinander getrennt sind. Die jeweilige Wand des Spülbehälters ist auf diese Weise fachwerkartig ausgebildet, was zum einen ihre Steifigkeit und mechanische Festigkeit erhöht und außerdem die Möglichkeit bietet, den Versteifungssteg zur Fixierung von Funktionselementen zu nutzen. Die Geschirrspülmaschine kann mit wenigstens einer außerhalb des Spülraums angeordneten Lichtquelle zum Einkoppeln von Licht in die Leuchtflächenelemente versehen sein. Diese haben insofern eine Doppelfunktion, als sie zum einen Konstruktionselemente sind, nämlich eine den Spülraum abgrenzende Wand bzw. einen Teilbereich davon bildet, und zum anderen in sie eingekoppeltes Licht in den Spülraum abstrahlen. Die innere Geometrie des Spülraums und dessen Nutzvolumen bleiben dabei im Wesentlichen unverändert, größere bauliche Anpassungen des Spülraums bzw. Spülbehälters aufgrund einer darin vorhandenen Lichtquelle herkömmlicher Art, etwa Leitungsdurchführungen durch eine Wand oder die Umkonstruktion von im Spülraum vorhandenen Bauteilen, etwa von beweglich in dem Spülbehälter geführten Aufnahmekörben für Spülgut, sind nicht erforderlich. Die Lichtquelle befindet sich vielmehr außerhalb des Spülraums z.B. an der Außenseite der entsprechenden zumindest in einem Teilbereich durch die Leuchtflächenelemente ersetzten Wand. In allen genannten Fällen und Ausgestaltungen emittieren die die Wand bzw. einen Teilbereich der Wand ersetzenden Leuchtflächenelemente zumindest einen Teil des eingekoppelten Lichts in den Spülraum und beleuchten bzw. illuminieren diesen. Die Lichtquelle lässt sich dabei insbesondere so anordnen, dass das von ihr emittierte Licht die vom Spülraum weg weisende Außenseite und/oder wenigstens eine Stirnseite bzw. Seitenkante der lichtdurchlässigen Wand bzw. des lichtdurchlässigen Teilbereichs beaufschlagt.

Oft sind bei Geschirrspülmaschinen um den Spülbehälter herum die Platzverhältnisse beengt, so dass hinsichtlich der Positionierung einer oder mehrerer Lichtquellen in diesem Bereich Platzprobleme bestehen. Diese Probleme werden bei einer zweckmäßigen Ausführungsvariante durch ein optisches Übertragungselement, das vorzugsweise wenigstens einen Lichtleiter, beispielsweise eine Glasfaser, umfasst, behoben, welches einerseits mit der Lichtquelle und andererseits mit Leuchtflächenelement optisch gekoppelt ist. Die Lichtquelle kann dann in einem ausreichend Raum zur Verfügung stellenden Bereich der Geschirrspülmaschine z.B. in einem Bereich unterhalb des Spülbehälters, angeordnet werden. Ein oder auch mehrere Übertragungselemente lassen sich dabei aufgrund ihres geringen Platzbedarfs auch in engen Spalträumen, etwa zwischen dem Spülbehälter und einer Außenwand der Geschirrspülmaschine, anordnen.

Das optische Erscheinungsbild des Spülraums in seinem beleuchteten Zustand lässt sich auf einfache Weise dadurch verändern bzw. den jeweiligen Designanforderungen anpassen, indem das Leuchtflächenelement gefärbt ist. Eine solche Färbung kann durch Verwendung von gefärbtem Material, beispielsweise von eingefärbtem Glas oder Kunststoff bewerkstelligt werden. Eine weitere Möglichkeit besteht darin, die Außen- und/oder Innenseite der Leuchtflächenelemente mit einer lichtdurchlässigen Farbschicht, insbesondere einer Kunststoff-Folie, zu versehen. Eine weitere Variante einer farblichen Gestaltung besteht darin, für ein Leuchtflächenelement ein lumineszierendes, insbesondere fluoreszierendes Material zu verwenden. Dabei enthält das Material lumineszierende Substanzen, die vorzugsweise in dem Material des Leuchtflächenelements eingebettet bzw. darin fein verteilt oder gelöst sind. Das Licht, das in ein solches Leuchtflächenelement durch eine außerhalb des Spülraums angeordneten Lichtquelle eingekoppelt wird, wird dabei zumindest teilweise in Lumineszenzlicht umgewandelt, das je nach Art des verwendeten Lumineszenz-Farbstoffs oder Farbstoffmischung gefärbt ist.

Eine weitere bevorzugte Ausgestaltung sieht vor, dass die Leuchtflächenelemente als Lichtleiter ausgebildet sind. Ein an einer Stelle eingekoppeltes Licht wird dabei innerhalb des Leuchtflächenelements weitergeleitet und über dessen gesamtes Volumen oder zumindest einen Teil davon verteilt. Eine solche Ausgestaltung ist besonders in Kombination mit einem lumineszierenden Material vorteilhaft. Derartige Materialien, die lumineszierend und gleichzeitig als Lichtleiter ausgebildet sind, sind als sogenannte lichtsammelnde Kunststoffe (LISA-Kunststoffe) bekannt, und enthalten meist Fluoreszenz-Farbstoffe.

Nicht jedes für ein Leuchtflächenelement in Frage kommendes lichtführendes und/oder lichtabstrahlendes Material hält auch den Bedingungen in einem Spülraum stand. In diesem Falle kann Abhilfe dadurch geschaffen werden, dass eine innenseitige, vom Leuchtflächenelementinneren in Richtung Spülraum lichtdurchlässige Schutzschicht beispielsweise in Form eines Lackes oder einer Folie vorgesehen wird, welche das Leuchtflächenelement vor allem vor Feuchtigkeit, aggressiven chemischen Einflüssen und auch vor einer zu starken thermischen Belastung schützt.

Bei der erfindungsgemäßen Geschirrspülmaschine sind neben dem den jeweiligen Durchbruch bzw. die jeweilige Durchbrechung der Wand überdeckenden Leuchtflächenelement zusätzlich noch ein oder mehrere transparente, transluzente oder reflektierende, etwa als Folien, Platten oder Scheiben ausgebildete Flächenelemente vorgesehen, die auf wenigstens einer Seite des Leuchtflächenelements angeordnet sind und -wie dieses - die Durchbrechung überdecken und zum Beispiel als Farbfilter wirken oder eine Abschirmung des Leuchtflächenelements gegenüber dem im Spülraum herrschenden chemischen und physikalischen Bedingungen bewirken. Das Leuchtflächenelement und ein oder mehrere Flächenelemente sind relativ zueinander so positioniert, dass sie jeweils durch einen Luftspalt mit einer Spaltbreite von mehr als 1 µm getrennt bzw. in Wandquerrichtung voneinander beabstandet sind. Durch diese Ausgestaltung werden zwei Effekte erzielt. Zum Einen ist mangels gegenseitiger flächiger Berührung der genannten Elemente verhindert, dass sich sogenannte Newton'sche Ringe bilden. Newton'sche Ringe sind durch Interferenz zwischen zwei sich überdeckenden, reflektierenden, nahezu parallelen Oberflächen entstehende Hell-Dunkel-Zonen oder Farbringe. Dies würde das optische Erscheinungsbild der von dem Leuchtflächenelement gebildeten Leuchtregion und die gesamte Beleuchtungssituation stören. Eine zuverlässige Unterdrückung dieser Erscheinung ist dann gegeben, wenn der Luftspalt eine Spaltbreite aufweist, die größer ist als 1 µm. Interferenzen der genannten Art können nur auftreten, wenn die Spaltbreite im Bereich der halben Wellenlänge des sichtbaren Lichts (max. ca. 780 nm bzw. 0,78 µm) liegt. Zum anderen kann der Luftspalt zur thermischen Isolierung des Spülraums beitragen. Dazu ist es zweckmäßig, die Spaltbreite größer zu wählen, als dies zur Vermeidung der Newton' schen Ringe erforderlich wäre, um die Isolationswirkung der in dem Luftspalt vorhandenen Luft zu erhöhen. Dabei sind jedoch angesichts des knappen Raumangebots in einer Geschirrspülmaschine und der Verhinderung von Luftkonvektion im Luftspalt, welche den Isolationseffekt wieder verringern würde, Grenzen gesetzt. Erfindungsgemäß wird daher die Spaltbreite des Luftspalts auf max. 2 cm begrenzt.

Für die Fixierung eines Leuchtflächenelements und anderen Flächenelementen an einer Wand des Spülbehälters sind naturgemäß eine Vielzahl unterschiedlicher Möglichkeiten denkbar. Bei einer bevorzugten Ausführungsvariante ist jedoch eine Fixierung des Leuchtflächenelements und/ oder eines dem Leuchtflächenelement beigeordneten, die Durchbrechung überdeckenden Flächenelements am Fixierflansch derart vorgesehen, dass eine auf unterschiedliche Wärmedehnungen einer beispielsweise aus Stahl bestehenden Spülbehälterwand, und einem etwa aus Kunststoff bestehenden Element der genannten Art beruhende, sich parallel zu der von dem Fixierflansch aufgespannten Ebene erstreckende Relativbewegung zwischen dem Leuchtflächenelement bzw. dem Flächenelement und dem Fixierflansch ausgeglichen wird. Aufgrund dieser Ausgestaltung der Fixierung können Materialen für Leuchtflächen- und Flächenelemente verwendet werden, die sich hinsichtlich ihrer Wärmeausdehnung von dem Material des Spülbehälters stark unterscheiden. Unterschiedliche Wärmedehnungen von Fixierflansch und einem daran gehaltenen Flächen- und/oder Leuchtelement können sich nicht in eine die Fixierung zumindest auf Dauer schwächenden Weise auswirken.

Bei einer besonders bevorzugten Ausführungsvariante wird für die in Rede stehende Art der Fixierung das Leuchtflächenelement oder das Flächenelement unter Zwischenlage einer elastischen, durch die Relativbewegung zwischen Leuchtflächenelement / Flächenelement und Fixierflansch bedingte Scherkräfte aufnehmenden Ausgleichsschicht 57 klebend mit dem Fixierflansch 16 verbunden. Die Ausgleichsschicht erfüllt dabei eine Doppelfunktion, indem sie einerseits eine Klebeverbindung und andererseits einen Ausgleich von Scherkräften gewährleistet. Letztere Funktion ist dann in hohem Maße erfüllt, wenn eine Ausgleichsschicht verwendet wird, die zumindest teilweise, vorzugsweise vollständig aus einem Kunststoffschaummaterial, insbesondere einem Polyolefinschaum, besteht. Ein ausreichender Ausgleich von Scherkräften ist dann gegebenen, wenn die Ausgleichsschicht eine Dicke von 0,2 mm bis 2 mm, insbesondere 0,4 mm bis 1 mm aufweist.

Wie weiter oben bereits erläutert wurde, dient der je zwei Durchbrechungen voneinander trennende Versteifungssteg unter anderem zur mechanischen Stabilisierung des Spülbehälters. Eine weitere Verbesserung in dieser Hinsicht wird bei einer weiteren bevorzugten Ausführungsvariante der Geschirrspülmaschine erreicht, indem an dem Fixierflansch eine die Durchbrechung überdeckende Vorsatzplatte aus einem transparenten oder transluzenten Material als Flächenelement befestigt ist, wobei auf deren dem Spülraum abgewandten Seite, gegebenenfalls unter Zwischenlage eines sonstigen Elements, etwa eines Flächenelements, ein Leuchtflächenelement angeordnet ist. Mit dieser Ausgestaltung werden mehrere Vorteile erzielt. Zum Einen kann das Leuchtflächenelement ohne Rücksicht auf etwaige mechanische Eigenschaften, auf unterschiedliche Wärmedehnung gegenüber dem Fixierflansch bzw. dem Spülbehälter oder auf eine Unverträglichkeit gegenüber den im Spülraum während des Betriebs herrschenden chemischen und physikalischen Bedingungen ausgewählt werden. Bei der Auswahl kann die Fokussierung allein auf die optischen Eigenschaften des Leuchtelements gerichtet sein, etwa darauf, eine möglichst gleichmäßige und effektive Leuchtwirkung zu erzielen. Hinsichtlich der Chemikalienverträglichkeit der Vorsatzplatte ist es zweckmäßig wenn zumindest eine dem Spülraum zugewandte Oberflächenschicht der Vorsatzplatte aus einem Material besteht, das beständig gegenüber den im Spülraum während des Betriebs der Geschirrspülmaschine eingesetzten Chemikalien ist.

Ein weiterer Vorteil der Vorsatzplatte besteht insbesondere darin, zusätzlich zu dem eingangs erwähnten Versteifungssteg eine weitere Erhöhung der mechanischen Stabilität, insbesondere im Hinblick auf eine Verformung des Spülbehälters zu bewirken, indem sie aus einem entsprechend stabilen und verwindungssteifen Material, beispielsweise aus einem Polyamid oder einem Polyacrylat gefertigt ist.

Die oben erläuterte Scherkräfte aufnehmende Fixierung eines Leuchtflächenelements oder eines sonstigen Flächenelements an dem Fixierflansch wird auf besonders vorteilhafte Weise dadurch weitergebildet, dass ein mit dem Fixierflansch verbundenes Leuchtflächenelement oder ein Flächenelement, beispielweise die oben beschriebene Vorsatzplatte, einen Träger bildet, an dem ein Leuchtflächenelement bzw. ein Flächenelement fixiert ist, ohne dass dieses mit der Wand des Spülbehälters verbunden ist. Das etwa über eine Ausgleichsschicht mit dem Fixierflansch verbundene Element, beispielsweise die Vorsatzplatte, trägt sozusagen im Huckepack-Verfahren alle anderen Elemente. Wegen deren fehlender mechanischen Fixierung mit der Spülbehälterwand spielen unterschiedliche Wärmedehnungen der Elemente und der Spülbehälterwand bzw. des Fixierflansches praktische keine Rolle.

Eine die genannte Huckepack-Fixierung gewährleistende Möglichkeit besteht darin, ein Leuchtflächenelement oder ein Flächenelement am Träger mit Hilfe eines Verbindungselements zu fixieren, welches mit einem in Wandquerrichtung wirksamen Formschluss mit dem Träger verbunden ist. Bei einer solchen Art der Fixierung sind weder der Einsatz von Schrauben oder Nieten noch von Klebemitteln erforderlich. Es wird lediglich dafür gesorgt, dass das Verbindungselement eine dem Spülbehälter zugewandte Fläche der Vorsatzplatte hintergreift. Dabei ergibt sich vor allem dann eine einfache Montage, wenn der genannte Formschluss über eine Schnappverbindung mit einer sich in Wand-Querrichtung erstreckenden Fügerichtung hergestellt wird. Das Verbindungselement kann dabei in bequemer Weise mit allen erforderlichen Elementen bestückt werden und anschließend das dabei entstandene Gebilde etwa mit der o.g. Ausgleichsschicht an den Fixierflansch geklebt werden. Besonders im Hinblick auf die in Rede stehende Vorbestückung des Verbindungselements ist es vorteilhaft, wenn auch die Verbindung zwischen dem Leuchtflächenelement und gegebenenfalls sonstiger Flächenelemente ebenfalls mit Hilfe eines in Wand-Querrichtung wirksamen, insbesondere als Schnappverbindung ausgebildeten Formschlusses erfolgt.

Das Verbindungselement ist bei einer weiteren bevorzugten Ausführungsvariante der Geschirrspülmaschine vorzugsweise als ein Rahmen ausgebildet, welcher den Träger, also beispielsweise die o.g. Vorsatzplatte, und das Leuchtflächenelement, quasi wie ein Bilderrahmen ein Bild, umgreift. Diese Ausgestaltung des Verbindungselement bewirkt neben dem in Wandquerrichtung wirksamen Formschluss auch eine Fixierung der von ihm gehaltenen Element in einer sich parallel zu der vom Fixierflansch aufgespannten Ebene, ohne dass dazu weitere Fixierelemente erforderlich wären.

Zur formschlüssigen Verbindung mit der Vorsatzplatte in Wand-Querrichtung weist der Rahmen zweckmäßigerweise wenigstens ein Hintergriffselement auf, welches die dem Spülraum zugewandte Seite der Vorsatzplatte hintergreift.

Bei einer weiteren bevorzugten Ausführungsvariante der Geschirrspülmaschine ist an der Rückseite, d.h. dem Spülraum abgewandten Außenseite des Leuchtflächenelements, das den Durchbruch in einer Spülbehälterwand von der Außenseite der Wand her überdeckt, eine Licht und/oder Wärmestrahlung reflektierende Reflektorfolie angeordnet. Durch diese zweckmäßige Ausgestaltung wird erreicht, dass die von einem Leuchtflächenelement zur Verfügung gestellte Leuchtregion aufgrund der Reflexion heller erscheint. Die Lichtausbeute des Leuchtflächenelements wird dabei erhöht, so dass gegebenenfalls Leuchtflächenelemente mit geringerer Beleuchtungsstärke eingesetzt werden können. Um, wie oben geschildert, die Bildung von Newton'schen Ringen, in der Trennfuge zwischen dem Leuchtflächenelement oder einem sonstigen Flächenelement und der Reflexionsschicht zu verhindern, sind die entsprechenden Elemente durch einen Luftspalt mit einer Spaltbreite von mindestens 1µm voneinander getrennt.

Durch die Reflektorfolie wird erreicht, dass ein das Leuchtflächenelement über dessen dem Spülbehälter abgewandte Außenseite verlassendes Licht nicht verloren geht, sondern reflektiert wird. Es hat sich nun überraschenderweise gezeigt, dass die Leuchtwirkung des Leuchtflächenelements wesentlich verbessert werden kann, wenn eine Lichtquelle vorgesehen ist, welche so angeordnet ist, dass von ihr ausgehendes Licht in eine Stirnseite der Reflektorfolie eingekoppelt wird. Dabei ist es besonders vorteilhaft, wenn eine zur stirnseitigen Einkopplung von Licht in ein Leuchtflächenelement vorhandene Lichtquelle, etwa eine LED-Leiste, verwendet wird. Die Lichtquelle ist dabei so positioniert und ausgerichtet, dass sie gleichzeitig zur stirnseitigen Einkopplung von Licht in das Leuchtflächenelement und in die Reflektorfolie dient.

Zusammenfassend betrachtet betrifft die Erfindung eine Geschirrspülmaschine mit einem im Spülbetrieb flüssigkeitsbeaufschlagten und damit nass werdenden Spülraum, der von mehreren Wänden eines Spülbehälters und von der Innenwand einer Tür umgrenzt ist. Zwei oder mehr Durchbrüche sind in mindestens einer der Wände, insbesondere in der Rückwand des Spülbehälters, jeweils von wenigstens einem Illuminationselement überdeckt oder verschlossen. Das jeweilige Illuminationselement umfasst dabei mindestens ein Leuchtflächenelement und wenigstens ein diesem beigeordnetes transparentes, transluzentes oder reflektierendes Flächenelement.

Vorzugsweise weist mindestens eine der Wände, insbesondere die Rückwand des Spülbehälters, wenigstens zwei, jeweils von einem Leuchtflächenelement überdeckten Durchbruch auf und dem Leuchtflächenelement ist wenigstens ein separates, die Durchbrechung überdeckendes transparentes, transluzentes oder reflektierendes Flächenelement beigeordnet. Das jeweilige Leuchtflächenelement und das diesem jeweils zugeordnete Flächenelement sind in Wandquerrichtung, d.h. entlang der Normalen der Wand betrachtet, zweckmäßigerweise durch einen Luftspalt voneinander getrennt. Das Illuminationselement, insbesondere dessen Leuchtflächenelement und/oder dessen Flächenelement, ist mittel- oder unmittelbar insbesondere an einem den Durchbruch umgrenzenden, einen Fixierflansch bildenden Rand der Wand, günstig z.B. durch eine Klebeverbindung und/oder mechanische Befestigung, fixiert. Die mehreren Illuminationselemente, insbesondere deren mehreren Leuchtflächenelemente, denen ggf. ein oder mehrere Flächenelemente beigeordnet sind, ersetzen insgesamt vorzugsweise mindestens 50 %, insbesondere mindestens 75 %, bevorzugt zwischen 80 % und 95 %, der Gesamtfläche der jeweiligen Wand. Insbesondere ist es zweckmäßig, eine Fixierung des Illuminationselements, insbesondere dessen Leuchtflächenelements und/oder dessen dem Leuchtflächenelement beigeordneten Flächenelements an der Wand, insbesondere deren Fixierflansch, derart vorzusehen, dass eine auf unterschiedliche Wärmedehnungen beruhende, sich parallel zu der von der Wand, insbesondere deren Fixierflansch, aufgespannten Ebene erstreckende Relativbewegung zwischen dem Illuminationselement, insbesondere dessen Leuchtflächenelement bzw. dessen Flächenelement, und der Wand, insbesondere deren Fixierflansch, ausgeglichen wird.

Das Illuminationselement, insbesondere dessen Leuchtflächenelement und/oder dessen Flächenelement, ist zweckmäßigerweise unter Zwischenlage einer elastischen, durch die Relativbewegung bedingte Scherkräfte aufnehmenden Ausgleichsschicht, insbesondere Dichtungsmittelschicht, klebend mit der Wand, insbesondere deren Fixierflansch, verbunden. Insbesondere kann es vorteilhaft sein, wenn an der Wand, insbesondere an deren den jeweiligen Durchbruch umgrenzenden Fixierflansch, eine die Durchbrechung überdeckende Vorsatzplatte aus einem transparenten oder transluzenten Material als Flächenelement angebracht, insbesondere befestigt, ist, wobei auf deren dem Spülraum abgewandten Seite das Leuchtflächenelement, insbesondere mit einem Luftspalt von der Vorsatzplatte beabstandet, angeordnet ist. Günstig kann es sein, wenn ein das Leuchtflächenelement und/oder das jeweilige Flächenelement aufnehmendes Halteelement, insbesondere ein das Leuchtflächenelement und/oder das jeweilige Flächenelement außen umfassender Rahmen vorgesehen ist. Das Halteelement mit dem gehalterten Leuchtflächenelement und dem diesem jeweilig beigeordneten Flächenelement bilden dann das Illuminationselement. Für eine einwandfreie Illumination der Wand im Inneren des Spülraums kann es vorteilhaft sein, wenn auf der dem Spülraum abgewandten Seite des Leuchtflächenelements eine den Durchbruch überdeckende, Licht und/oder Wärmestrahlung reflektierende Reflektorfolie als Flächenelement angeordnet ist. Dabei ist dieses reflektierende Flächenelement vom Leuchtflächenelement zweckmäßigerweise mit einem vorgegebenen Luftspalt beabstandet angeordnet. Zweckmäßigerweise ist eine Lichtquelle vorgesehen, welche so angeordnet ist, dass von ihr ausgehendes Licht in eine Stirnseite der Reflektorfolie eingekoppelt wird. Zusätzlich oder unabhängig hiervon ist die Lichtquelle zweckmäßigerweise so angeordnet, dass von ihr ausgehendes Licht in eine Stirnseite des Leuchtflächenelements eingekoppelt wird. Das Illuminationselement ist vorteilhafterweise auf der dem Spülraum abgewandten Außenseite der jeweiligen Wand deren jeweiligen Durchbruch von hinten abdeckend angebracht. Dadurch bleibt der Spülraum, insbesondere hinsichtlich seines ursprünglich bereitgestellten Raumangebots (ohne Wandbeleuchtung betrachtet), weitgehend unbeeinträchtigt von den Komponenten des jeweiligen Illuminationselements. Durch die schichtweise Anordnung der spülchemiebeständigen Vorsatzplatte, des dazu mit vorgegebenen Spaltabstand versetzt angeordneten Leuchtflächenelements und des zu diesem mit vorgegebenen Spaltabstand versetzt angeordneten Reflexionsflächenelements (von innen nach außen betrachtet) resultiert ein flach ausgebildeter Sandwichaufbau des Illuminationselements, so dass dieses trotz des geringen Platzangebotes an der Außenseite der jeweiligen Wand, insbesondere Rückwand, so angebracht werden kann, dass es nicht in unzulässiger Weise gegenüber den vorgegebenen Maßen der Geschirrspülmaschine hervorsteht.

Besonders zweckmäßig kann es sein, wenn in Breitenrichtung der Wand betrachtet eine Reihe von mindestens zwei Durchbrüchen mit zugehörigen, diese überdeckenden oder verschließenden Illuminationselementen vorgesehen ist, und/oder dass in Höhenrichtung der Wand betrachtet eine Reihe von mindestens zwei Durchbrüchen mit zugehörigen, diese überdeckenden oder verschließenden Illuminationselementen vorgesehen ist. Durch verbleibende Zwischenstege der jeweilig zu illuminierenden Wand zwischen den einzelnen Durchbrüchen bleibt die jeweilig zu illuminierende Wand insgesamt weitgehend ausreichend steif bzw. stabil.

Die vorstehend erläuterten und/oder in den Unteransprüchen wiedergegebenen vorteilhaften Aus- und Weiterbildungen der Erfindung können - außer z. B. in den Fällen eindeutiger Abhängigkeiten oder unvereinbarer Alternativen - einzeln oder aber auch in beliebiger Kombination miteinander zur Anwendung kommen. Insbesondere sind die auf Leuchtflächenelemente, Flächenelemente und deren Fixierung am Spülbehälter gerichteten Ausgestaltungen unabhängig von der Anzahl, mit der sie an einer Spülbehälterwand vorhanden sind.

Die Erfindung und ihre vorteilhaften Aus- und Weiterbildungen sowie deren Vorteile werden nachfolgend anhand von Zeichnungen näher erläutert.

Es zeigen jeweils in einer schematischen Prinzipskizze:
- Fig. 1: ein vorteilhaftes Ausführungsbeispiel einer erfindungsgemäß ausgebildeten Geschirrspülmaschine in perspektivischer Darstellung,
- Fig. 2: einen Spülbehälter der in Fig.1 gezeigten Geschirrspülmaschine in perspektivischer Darstellung, von der Rückseite her betrachtet,
- Fig. 3: einen Teilschnitt des Spülbehälters von Fig. 2 entsprechend Linie III-III,
- Fig. 4: einen Teilschnitt des Spülbehälters von Fig. 2 entsprechend Linie IV-IV,
- Fig. 5: einen Eckbereich des Spülbehälters entsprechend dem Ausschnitt V in Fig. 3, bei dem die Einkopplung von Licht mittels eines Lichtwellenleiters stirnseitig in das Leuchtflächenelement erfolgt,
- Fig. 6: eine Fig. 5 entsprechende Darstellung mit einer abgewandelten Lichteinkopplung in das Leuchtflächenelement,
- Fig. 7: den Ausschnitt VII von Fig. 4, der eine andere Art der Lichteinkopplung in das Leuchtflächenelement zeigt,
- Fig. 8: eine Schnittdarstellung eines Leuchtflächenelements,
- Fig. 9: eine Fig. 5 entsprechende Darstellung, welche eine weitere Möglichkeit der Befestigung eines Leuchtflächenelements an einer Wand des Spülraums aufzeigt,
- Fig. 10: eine perspektivische Explosionsdarstellung, welche eine weitere Möglichkeit der Befestigung eines Leuchtflächenelements aufzeigt, bei der dieses mit Hilfe eines Rahmens an einer Wand des Spülraums befestigt wird,
- Fig. 11: einen Teilschnitt eines Rahmens entsprechend Linie XI-XI in Fig. 10, wobei dieser mit einem Leuchtflächenelement und zwei anderen Zwecken dienenden Flächenelementen an der Rückwand des Spülbehälters angeordnet ist,
- Fig. 12: einen Teilschnitt entsprechend Linie XII-XII in Fig. 10,
- Fig. 13: den Ausschnitt XIII von Fig. 11 in vergrößertem Maßstab,
- Fig. 14: eine perspektivische Teildarstellung einer Reflektorfolie, und
- Fig. 15: schematisch in perspektivischer Darstellung ein weiteres vorteilhaftes Ausführungsbeispiel für eine beleuchtete Wand, insbesondere die Rückwand des Spülbehälters der Geschirrspülmaschine von Figur 1 und zwar von außen betrachtet, wobei zusätzlich die Einzelkomponenten eines Beleuchtungsfeldes der Wand in Explosionsdarstellung abgebildet sind.

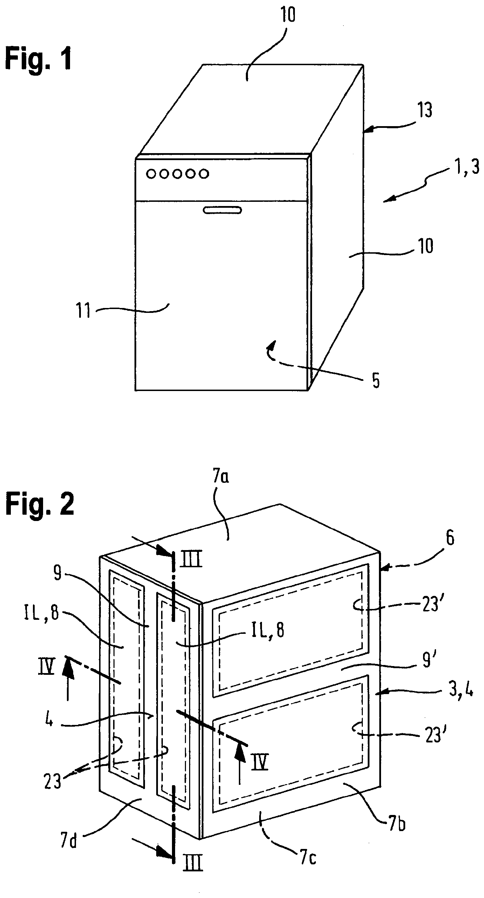

In den Figuren 1 - 15 sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Gruppen umfassen kann.

In Fig. 1 ist eine Geschirrspülmaschine 1 mit einem Spülbehälter 3 schematisch leicht perspektivisch in Vorderansicht dargestellt, in der ein vom Spülbehälter 3 und von einer Tür 11 umgrenzter Spülraum 5 vorhanden ist. Figur 2 zeigt den Spülbehälter 3 leicht perspektivisch von seiner Rückseite her betrachtet. Eine Geschirrspülmaschine ist vielfach als Einbaugerät ausgestaltet, und ist dann im Einbauzustand außenseitig von Möbelwänden umgeben, wobei ein Außengehäuse teilweise oder ganz wegfallen kann. Andernfalls kann sie zweckmäßigerweise ein von Außenwänden 10 gebildetes Gehäuse 13 aufweisen, das den Spülbehälters 3 umgibt. Der Spülbehälter 3 weist hier im Ausführungsbeispiel eine vorderseitige, von einer Fronttür 11 verschließbare Beladeöffnung 6 sowie insgesamt fünf Wände 7 auf, nämlich eine Deckenwand 7a, zwei Seitenwände 7b, eine Bodenwand 7c und eine Rückwand 7d, wobei mindestens eine dieser Wände, insbesondere die Rückwand 7d, auf die im Folgenden exemplarisch Bezug genommen wird, durch zwei Leuchtflächenelemente 8 zu mindestens 20 % ersetzt ist. Die Leuchtflächenelemente überdecken jeweils einen von zwei in der Rückwand 7d vorhandenen Durchbrüchen 23 (in Fig. 2 mit gestrichelten Linien dargestellt), wobei die Durchbrüche von einem Versteifungssteg 9 voneinander getrennt sind. Die Leuchtflächenelemente 8 ersetzen insgesamt vorzugsweise mindestens 50 %, insbesondere mindestens 75 %, bevorzugt zwischen 80 % und 95%, der Fläche mindestens einer Wand, insbesondere der Rückwand 7d. Im Falle eines Flächenersatzes von 95% nimmt der Versteifungssteg 9 zumindest einen Teil der verbleibenden Restfläche von 5% ein. Jedes Leuchtflächenelement 8 bildet somit eine großflächige Illuminationseinheit oder Lichtdesigneinheit, die die jeweilig ersetzte Wandfläche hell gegenüber den übrigen Wänden wie z.B. 7a, 7b, 7c erstrahlen lässt. Es kann dazu insbesondere als, vorzugsweise gleichmäßig strahlende, Hintergrundbeleuchtung oder als diffuser Leuchtstrahler ausgebildet sein. Zweckmäßigerweise ist sie als planflächige Platte, planflächiges Paneel oder planflächige Folie ausgebildet, so dass sie zum Austausch einer Wand oder eines Wandteils taugt. Dabei weist sie vorzugsweise eine Rechtecksform (in Draufsicht betrachtet) auf.

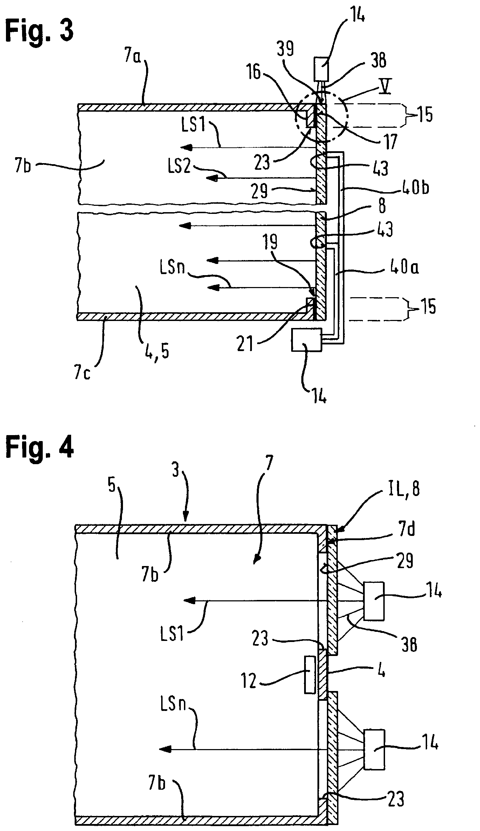

Wie Fig. 2 entnehmbar ist, können sich die beiden, in Breitenrichtung der Wand nebeneinander vorgesehenen Leuchtflächenelemente 8 nahezu über die gesamte Höhe des Spülbehälters 3 erstrecken. Dementsprechend verläuft auch der mittig zwischen den beiden mit Leuchtflächenelementen überdeckten oder verschlossenen Durchbrüchen verbliebene Versteifungssteg 9 in Höhen- bzw. Vertikalrichtung. Wie eingangs schon erläutert wurde, erhöht der Versteifungssteg die Stabilität des Spülbehälters. Er dient aber auch als Montagesteg, an den Bauteile montiert werden können, beispielsweise eine im Spülraum 5 an der Rückwand 7d fixierte und sich vertikal erstreckende Zuführleitung 12 zur Zufuhr von Spülflüssigkeit zu einem Sprüharm (Fig.4). Die vom Spülraum 5 weg weisende Außenseite 4 des Versteifungsstegs 9 kann ebenfalls zur Montage von Bauteilen genutzt werden, etwa von Schläuchen bzw. Leitungen (nicht gezeigt), die etwa ebenfalls zur Zuführung von Spülflüssigkeit zu einem Sprüharm dienen. An einer Seitenwand 7b ist in Fig. 2 eine weitere Situation angedeutet, bei der zusätzlich oder unabhängig von der oben erläuterten Vertikalanordnung der beiden Durchbrüche 23 in der Rückwand 7d mit dem zwischen ihnen vorhandenen vertikalen Versteifungssteg 9 der Versteifungssteg 9' und die Durchbrüche 23' in Tiefenrichtung des Spülbehälters 3 bzw. horizontal verlaufen. Der Versteifungssteg kann in diesem Fall dazu genutzt werden, an seiner Innenseite Führungsmittel, insbesondere Führungskulissen für einen in Tiefenrichtung verfahrbaren Aufnahmekorb (nicht gezeigt) zu fixieren. Selbstverständlich kann es ggf. auch zweckmäßig sein, diese Horizontalanordnung von zwei Durchbrüchen mit zwischen ihnen horizontal verlaufendem Versteifungssteg nicht in der Seitenwand 7b, sondern in der Rückwand 7d des Spülbehälters vorzusehen.

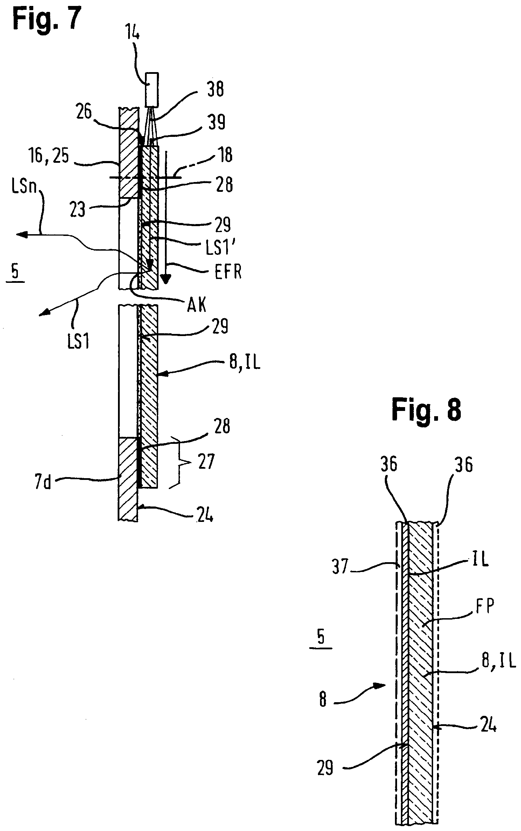

Damit ein Leuchtflächenelement leuchten oder Licht abstrahlen kann, ist es zweckmäßigerweise als lichtleitender oder lichtführender Lichtleiter ausgebildet. Dabei können sich Lichtstrahlen, die in das Leuchtflächenelement z.B. von einer außerhalb des Spülbehälters angeordneten Lichtquelle wie z.B. 14 (siehe z.B. Figur 3, 4) eingekoppelt werden, oder im Material des Leuchtflächenelements durch energetische Anregung erzeugt werden, in diesem fortpflanzen und an einer Vielzahl von Auskoppelstellen, insbesondere quer zu ihrer Fortpflanzungsrichtung, aus der dem Innenraum des Spülbehälters zugewandten Innenwand des Leuchtflächenelements in den Innenraum des Spülbehälters ausgekoppelt werden. Für die Lichtführung oder Lichtleitung weist das Leuchtflächenelement 8 eine flache Trägerplatte aus einem lichtleitenden oder lichtführenden Material wie z.B. aus Glas, transparentem oder transluzentem Kunststoff wie z.B. Acrylglas oder einem Verbund aus den beiden Werkstoffen auf. Es umfasst Extraktoren zur Auskopplung von Licht aus der lichtführenden oder lichtleitenden Trägerplatte. Die Lichtauskopplung kann durch im Lichtleitermaterial der flachen Trägerplatte verteilte, reflektierende und/oder streuende Strukturen wie z.B. FP (siehe z.B. Figur 8), durch gezielte, feine Oberflächenstrukturen an der dem Spülraum zugewandten Innenwandfläche der lichtführenden oder lichtleitenden Trägerplatte, und/oder durch feine, auf der dem Spülraum zugewandten Innenwandfläche der lichtführenden oder lichtleitenden Trägerplatte aufgebrachte, insbesondere aufgedruckte, Muster wie z.B. aus Farbpartikeln realisiert werden. Die inhomogene bzw. heterogene Verteilung der auskoppelnden Strukturen bewirkt, dass eine weitgehend gleichmäßige Ausleuchtung der Fläche des Leuchtflächenelements erreicht wird, da Lichtstrahlen aus der lichtleitenden oder lichtführenden Trägerplatte ins Innere des Spülraums in alle Raumrichtungen gestreut abgestrahlt wird.

Zusammengefasst betrachtet ist das Leuchtflächenelement derart als Lichtleiter ausgebildet, dass Licht, das z. B. von einer oder mehreren punkt- oder stabförmigen Lichtquellen ausgesandt wird, die vorzugsweise außerhalb des Spülraums angeordnet ist oder sind, möglichst gleichmäßig über die Fläche des Leuchtflächenelements verteilt wird, um eine Hintergrundbeleuchtung, d.h. ein "backlight" bereitstellen zu können. Dies wird insbesondere als Lichtführung oder Lichtleitung bezeichnet. Dabei kann Licht wie z.B. 38 beispielsweise an einer Stirnseite wie z.B. 39 des Leuchtflächenelements wie z.B. 8 eingespeist werden (siehe Figur 3). Alternativ oder zusätzlich kann Licht in das lichtführende Material des Leuchtflächenelements 8 über die rückseitige, d.h. vom Spülraum 5 abgewandte Außenwandfläche wie z. B. 24 des flach plattenförmigen Leuchtflächenelements eingekoppelt werden (siehe Figur 4). Das flache, als Lichtleiterplatte ausgebildete Leuchtflächenelement 8 ist vorzugsweise aus Glas oder aus einem transparenten oder transluzenten Kunststoff wie etwa Acrylglas. Diese enthält z.B. Extraktoren, die das Licht aus dem Lichtleiter in den Spülraum 5 auskoppeln. Die Auskopplung kann durch im Lichtleitermaterial verteilte streuende und/oder reflektierende Strukturen, durch gezielte feine Oberflächenstrukturen, und/oder durch feine, insbesondere aufgedruckte Muster wie z.B. in Form einer Farbschicht oder einer sonstigen Streu- und/oder Reflexionsschicht realisiert werden. Zur Vergrößerung der Leuchtdichte des Leuchtflächenelements kann Licht einer oder mehrerer Lichtquellen in vorteilhafter Weise an mehreren Stellen des Leuchtflächenelements, wie z.B. an mehreren stirnseitigen Stellen, insbesondere an zwei, drei oder allen vier Stirnflächen der etwa rechteckförmigen Platte des Leuchtflächenelements, eingekoppelt werden. Zusätzlich oder unabhängig hiervon kann Licht auch an der rückseitigen Außenwandfläche des Leuchtflächenelements an mehreren über die Außenwandfläche verteilten Stellen in das lichtführende oder lichtleitende Material des Leuchtflächenelements eingespeist werden.

Das Leuchtflächenelement 8 ist vorzugsweise derart lichtleitend und/oder lichtabstrahlend ausgebildet, dass ein oder mehrere Lichtstrahlen 38, 45 (siehe Figuren 3, 7, 5) wenigstens einer außerhalb des Spülraums 5 angeordneten Lichtquelle 14, 40 in das Leuchtflächenelement 8 an mindestens einer Einkoppelstelle 39, 24 einkoppelbar sind, ein oder mehrere eingekoppelte Lichtstrahlen wie z.B. LS1' (siehe Figur 7) im Leuchtflächenelement 8 ausgehend von ihrer jeweiligen Einkoppelstelle 39, 24 weg mit einer parallel zur dem Spülraum 5 zugewandten Innenwandfläche 29 des Leuchtflächenelements 8 verlaufenden Fortpflanzungsrichtung EFR (siehe Figur 7) ausbreitungsfähig sind, und dass von den ein oder mehreren, sich derart fortpflanzenden Lichtstrahlen wie z.B. LS1', insbesondere quer zu deren Fortpflanzungsrichtung EFR, aus der dem Spülraum 5 zugewandten Innenwandfläche 29 des Leuchtflächenelements 8 ein oder mehrere Lichtstrahlen LS1- LSn an ein oder mehreren, von der jeweiligen Einkoppelstelle 39, 24 verschiedenen Auskoppelstellen AK in den Spülraum 5 hinein auskoppelbar sind, jedoch das Leuchtflächenelement 8 vom Spülraum 5 aus betrachtet weitgehend blickdicht ausgebildet ist.

Insbesondere kann es vorteilhaft sein, wenn das jeweilige Leuchtflächenelement 8 von der Spülraumseite her betrachtet milchig oder in einer sonstigen Weise diffus leuchtend ausgebildet ist.

Bei der Geschirrspülmaschine 1 sind hingegen die anderen Wände wie z.B. 7a, 7b, 7c eines Spülbehälters wie herkömmlich aus einem lichtundurchlässigen Material wie z.B. Metall und/oder opaker Kunststoff hergestellt.

Weiterhin können zur Bildung eines flächigen Leuchtstrahlers bzw. eines Leuchtflächenelements auch andere Konstruktionen eingesetzt werden, wie z.B. solche, die als Leuchtkästen ausgebildet sind. Die Lichtquellen befinden sich dabei in einer flachen Wanne, die das Licht in ihrem Innern diffus reflektiert und nur zur offenen Seite hin, hier also in Richtung Spülraum 5 austreten lässt. Ferner kann es vorteilhaft sein, wenn für Leuchtstofflampen als Lichtquelle speziell geformte Reflektoren und für LEDs Diffusorlinsen eingesetzt werden, damit trotz einer geringen Bautiefe der Hintergrundbeleuchtung das aus der Lichtwanne austretende Licht annähernd homogen ist.

Falls das vom flach plattenförmigen Lichtleiter oder der Lichtwanne verteilte Licht eventuell noch eine räumliche Struktur hat, kann es ggf. vorteilhaft sein, wenn dieses mittels mindestens eines Diffusors gleichverteilt wird, damit es einer absolut gleichmäßig, insbesondere weiß, leuchtenden Fläche nahe kommt. Eine einfache Lösung ist z.B. eine opal streuende Platte zwischen Lichtleiter oder Lichtwanne und der dem Spülraum 5 zugewandten Innenwandfläche des 29 des Leuchtflächenelements 8. Insbesondere können auch Folien eingesetzt werden, die das Licht effizienter homogenisieren, als dies z.B. mit Opalglas möglich ist.

Durch Einkopplung des Lichtes wenigstens einer Lichtquelle 14, etwa einer Glühlampe oder Leuchtdiode in das Leuchtflächenelement 8, wird Licht innerhalb von diesem weitergeleitet und schließlich in den Innenraum des Spülbehälters 3 emittiert.

Ein Leuchtflächenelement 8 ist mit seinem äußeren Randbereich 15 beispielsweise an den übrigen, benachbarten, beispielsweise aus Blech bestehenden Wänden 7a - 7c fixiert, wobei dafür eine Reihe verschiedener Möglichkeiten bestehen. Ganz allgemein ist ein Leuchtflächenelement 8 an einem Fixierflansch 16 fixiert, welcher einen Durchbruch 23 in einer Wand 7 des Spülbehälters 3 umgrenzt. Das Leuchtflächenelement 8 ist an einer Montagefläche 17 des Fixierflansches 16 fixiert, wobei diese entweder von der Innenseite oder von der Außenseite des Fixierflansches 16 gebildet ist. Die lichte Weite des vorzugsweise rechteckförmigen Durchbruchs 23 ist in Höhenrichtung betrachtet nur geringfügig kleiner als der Abstand zwischen Bodenwand 7c und Deckenwand 7a sowie in Breitenrichtung betrachtet nur geringfügig kleiner als der halbe Abstand zwischen den beiden Seitenwänden 7b. Der Fixierflansch 16 kann durch eine 90° Umbördelung nach innen zum jeweiligen Durchbruch 23 in der Rückwand 7c hin der hinteren stirnseitigen Randbereiche der Deckwand 7a, der Seitenwände 7b und der Bodenwand 7c gebildet sein. Der Fixierflansch 16 kann aber auch der Rest einer Wand 7 sein, der nach Herstellung eines Durchbruchs 23 mit Hilfe einer Stanzung stehen bleibt. Die Fixierung des großflächigen Leuchtflächenelements 8 am Fixierflansch 16 kann beispielsweise mit Hilfe einer Klebstoffschicht 21 erfolgen, wobei diese auch eine Abdichtung einer zwischen der Montagefläche 17 und dem Leuchtflächenelement 8 vorhandenen Trennfuge 19 sicherstellt, so dass keine Spülflüssigkeit zwischen dem Fixierflansch 16 und dem Leuchtflächenelement 8 nach außen treten kann.

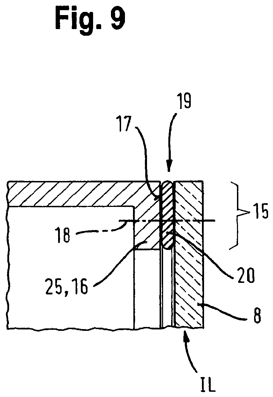

In Fig. 9 ist eine zusätzliche oder alternative Fixierung gezeigt, nämlich über eine Schraubverbindung zwischen dem äußeren Randbereich 15 des plattenförmigen, insbesondere rechteckförmigen Leuchtflächenelements 8 und dem Fixierflansch 16. Die Schraubverbindung ist in Fig. 9 durch eine gestrichelte Linie 18 angedeutet. In der Trennfuge 19 zwischen dem Leuchtelement 8 und der Montagefläche 17 ist eine Dichtung 20 beispielsweise aus einem Elastomermaterial angeordnet.
Alternativ kann das Leuchtflächenelement an die Innenseite oder, wie in Fig. 7 gezeigt, bevorzugt an die Außenseite einer Wand, etwa der Rückwand 7d des Spülraums 5 bzw. Spülraums 5 fixiert sein, wobei das Leuchtflächenelement 9 so bemessen ist, dass es den die Durchbrechung 23 umrahmenden Rand 25 der Wand 7d bzw. den Fixierflansch 16 außenseitig, d.h. auf der dem Spülraum 5 abgewandten Seite überlappt. Die Fixierung des Leuchtflächenelements 8 an dem Fixierflansch 16 der Rückwand 7d kann wiederum auf unterschiedliche Weise, beispielsweise mit Hilfe einer Klebstoffschicht 28 erfolgen, wobei diese auch eine Abdichtung der im Überlappungsbereich 27 zwischen dem Rand 25 und dem Leuchtflächenelement 8 vorhandenen Trennfuge 26 übernimmt. Die Fixierung kann weiterhin zusätzlich oder alternativ durch eine Schraubverbindung, angedeutet durch die strichpunktierte Linie 18, erfolgen. Anstelle einer Klebstoffschicht 28 kann auch eine umlaufende Dichtung, entsprechend der Dichtung 20 in Fig. 9, vorgesehen sein.

Das jeweilige Leuchtflächenelement 8 kann insbesondere so gestaltet sein, dass das von ihm in den Spülraum emittierte Licht eine andere Farbe aufweist, als das eingekoppelte Licht der Lichtquelle 14. Dies kann beispielsweise dadurch ermöglicht werden, dass das Material des Leuchtflächenelements 8 Farbstoffe FP oder sonstige Streu- und/oder Reflexionspartikel enthält. Denkbar ist aber auch, dass zusätzlich oder alternativ dazu eine Farbschicht 36 oder sonstige Partikelschicht beispielsweise in Form einer gefärbten Kunststoff-Folie o.dgl. an der Innenseite bzw. Innenwandfläche 29 und/oder der Außenseite bzw. Außenwandfläche 24 des Leuchtflächenelements 8, 9 angebracht, etwa aufgeklebt ist (Fig. 8). Als Farbstoffe können ggf. auch lumineszierende Farbstoffe verwendet werden. Eine weitere Ausgestaltungsmöglichkeit ist es, das wandersetzende Leuchtflächenelement 8 als Lichtleiter auszubilden, wobei sich insbesondere zusammen mit einem im Material des Leuchtflächenelements 8 enthaltener lumineszierenden Farbstoff weitere optische Gestaltungsmöglichkeiten ergeben.

Zum Schutz vor im Spülraum 5 herrschenden Bedingungen, etwa zum Schutz vor Reinigungschemikalien, Feuchtigkeit oder hohen Temperaturen, kann das Leuchtflächenelement 8 innenseitig, d.h. auf der dem Spülraum 5 zugewandten Seite mit einer Schutzschicht 37 aus einem vom Schichtinneren des Leuchtflächenelements 8, 9 nach außen in Richtung Spülraum 5 lichtdurchlässigen Material, beispielsweise mit einem Lack oder einer Kunststofffolie versehen sein, das von außen, insbesondere vom Spülraum 5 her betrachtet weitgehend blickdicht, insbesondere opak wirkt.

Die Schutzschicht 37 ist entweder direkt an der dem Spülraum zugewandten Innenwand der lichtführenden Trägerplatte des Leuchtflächenelements aufgebrächt. Falls eine Farbschicht 36 auf der dem Spülraum zugewandten Innenwandfläche 29 vorhanden ist, ist die Schutzschicht auf dieser als oberste Abschlussschicht aufgebracht, wie dies in Fig. 8 gezeigt ist. Im Fall einer Lichteinkopplung über eine Stirnseite des Leuchtflächenelements 8 kann die Abstrahlung von Licht in den Spülraum 5 verstärkt werden, indem das Leuchtflächenelement 8 außenseitig, d.h. auf der dem Spülraum 5 abgewandten Außenwandfläche 24 mit einer Lichtstrahlen zum Spülraum 5 hin reflektierenden Schicht versehen werden.

Die Einkopplung von Licht kann prinzipiell so erfolgen, dass die Lichtquelle 14 mit Abstand, d.h. unter Freilassung einer Luftstrecke, zum Leuchtflächenelement 8 angeordnet ist. Die Lichtquelle 14 kann dann insbesondere so ausgestaltet sein, dass ihr Lichtkegel 38 die Außenwandfläche 24 des Leuchtflächenelements 8 vollständig beaufschlagt. Insbesondere können mehrere Lichtquellen 14 derart örtlich versetzt voneinander vorgesehen sein, dass ihre Lichtkegeln unterschiedliche Bereiche der Außenwandfläche 24 eines Leuchtflächenelements 8 abdecken oder, wie dies in Fig. 4 der Fall ist, jeweils einem Leuchtflächenelement 8 zumindest eine Lichtquelle zugeordnet ist. Denkbar ist aber auch eine Anordnung einer Lichtquelle 14 so, dass ihr Lichtkegel 38 die Stirnfläche 39 des Leuchtflächenelements8, beaufschlagt (Fig. 3). Ggf. können auch an mehreren Stirnseiten des Leuchtflächenelements 8 eine oder mehrere Lichtquellen zur stirnseitigen Einkopplung von Licht vorgesehen sein.

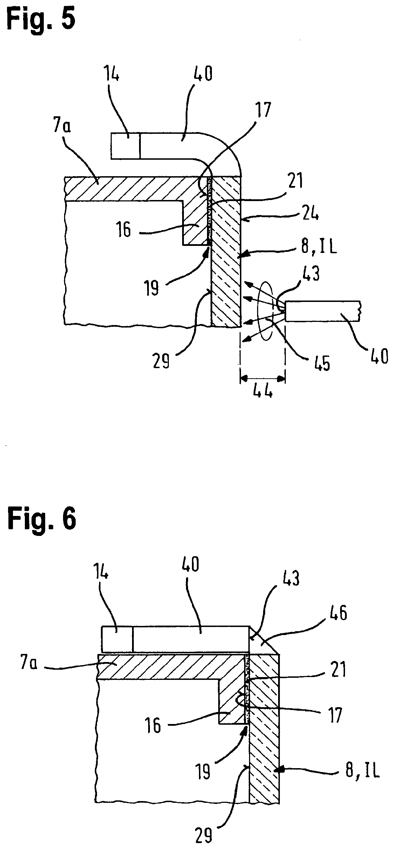

Zur Lichteinkopplung kann insbesondere ein optisches Übertragungselement 40 vorgesehen sein. Dieses ist beispielsweise aus einem oder mehreren Lichtwellenleitern, beispielsweise Glasfasern gebildet und ist einerseits mit der Lichtquelle 14 und andererseits mit einer Außenwandfläche 24 oder einer Stirnseite 39 des Leuchtflächenelements 8 gekoppelt. Die optische Kopplung zwischen dem Übertragungselement 40 und dem Leuchtflächenelement 8 kann ggf. berührungslos, insbesondere unter Zwischenschaltung einer Optik- oder Abbildungseinheit, erfolgen. Zwischen der Lichtaustrittsfläche 43 des Übertragungselements 40 und dem Leuchtflächenelement 8 ist dann ein Abstand 44 bzw. eine freie Luftstrecke vorhanden. An der Lichtaustrittsfläche 43 bildet sich ein Lichtkegel 45 aus (siehe Fig. 5). Die optische Kopplung kann aber auch unmittelbar sein, d.h. die Lichtaustrittsfläche 43 des Übertragungselements 40 steht mit dem Leuchtflächenelement 8 in mechanischer Verbindung. Bei jeder Art der optischen Kopplung kann der Lichtaustrittsfläche 43 ein optisches Umlenkelement 46 oder ein optisches Abbildungssystem vorgeschaltet sein. Um einen größeren Flächenbereich des Leuchtflächenelements 8 mit Licht zu beaufschlagen und/oder dessen Leuchtdichte zu erhöhen kann es zweckmäßig sein, mehrere Lichtquellen 14 oder/oder mehrere Übertragungselemente 40 vorzusehen. In Fig. 3 ist ein Fall gezeigt, bei dem an eine Lichtquelle 14 mehrere Übertragungselemente 40a, 40b optisch gekoppelt sind, deren Lichtaustrittsflächen 43 an unterschiedlichen Positionen der Außenwandfläche 24 des Leuchtflächenelements 8 angeordnet sind.

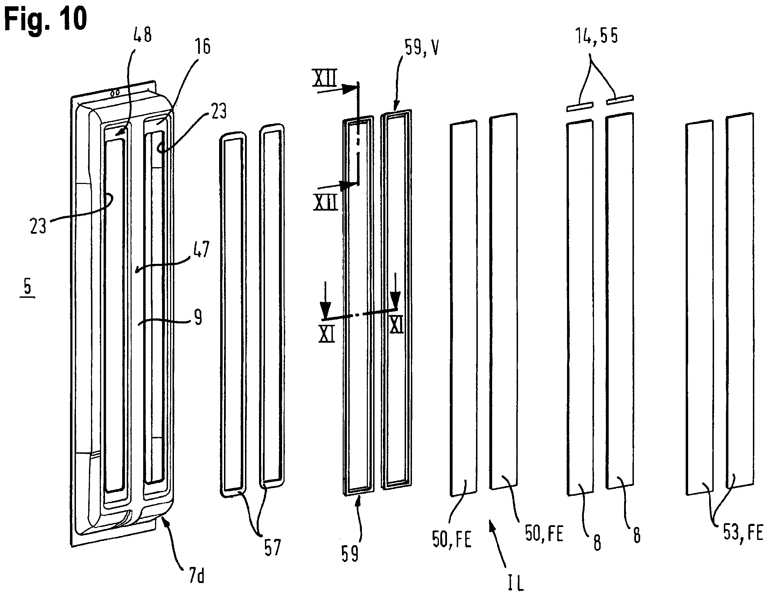

Fig. 10 zeigt als Einzelheit die Rückwand 7d eines Spülbehälters 3. Diese ist vorzugsweise einstückig mit dem beispielsweise tiefgezogenen Spülbehälter 3 (in Fig. 10 nicht gezeigt) ausgebildet. In der Rückwand 7d sind zwei fensterartige Durchbrechungen 23 vorhanden, die im Wesentlichen rechteckförmig sind und sich nahezu über die gesamte Höhe des Spülbehälters 3 bzw. der Rückwand 7d insbesondere im Wesentlichen vertikal erstrecken. Die vorzugsweise durch einen Stanzvorgang hergestellten Durchbrechungen 23 sind von einem Rand der Rückwand 7d, der einen Fixierflansch 16 insbesondere zur Fixierung eines Leuchtflächenelements 8 bildet, umgrenzt. Die Durchbrüche 23 sind von einem Versteifungssteg 9 voneinander getrennt, wobei sich dieser, wie die Durchbrüche 23 auch, in Vertikalrichtung des Spülbehälters 3 erstreckt. Die aufgrund des Ersatzes eines Großteils der Rückwand 7d durch eine Leuchtregion verringerte mechanische Stabilität des Spülbehälters 3 wird neben der Tatsache, dass die Leuchtregion durch zwei durch einen Versteifungssteg voneinander getrennte Durchbrüche 23 bzw. diese überdeckende oder verschließende Leuchtflächenelemente 8 realisiert ist, auch noch dadurch erhöht, dass der Fixierflansch 16 gegenüber der vom Versteifungssteg aufgespannten Ebene 47 in Wandquerrichtung 58 versetzt ist. Der Versteifungssteg 9 erhält dadurch im Querschnitt gesehen die Form eines C-Profils, was insbesondere seine Knick- und Verwindungssteifigkeit wesentlich erhöht. Die übrigen, die Durchbrechungen umgrenzenden Wandbereiche sind aufgrund des in Rede stehenden Versatzes nach Art von Winkelprofilen bzw. gestuft ausgebildet, was die mechanische Stabilität der Rückwand weiter erhöht. Der Versatz des Fixierflansches 16 lässt sich auf einfache Weise herstellen, indem in die Rückwand 7d (oder eine sonstige Wand des Spülbehälters) von ihrer Innenseite oder ihrer Außenseite her eine Vertiefung 48 eingeprägt und dann ein dem Durchbruch 23 entsprechender Bereich der Vertiefung 48 ausgestanzt wird. Vorzugsweise ist der Fixierflansch 16 zum Spülraum 5 hin versetzt, d.h. die Vertiefung 48 ist von der Außenseite der Rückwand 7d her in Richtung Spülraum eingedrückt worden. Ein Leuchtflächenelement 8 kann in diesem Fall an der vom Spülraum 5 weg weisenden Außenseite des Fixierflansches 16 angebracht werden, wobei ein Teil seiner Dicke von der Vertiefung bzw. Mulde 48 aufgenommen wird, d.h. das Leuchtflächenelement 8 steht nicht oder nur zum Teil über die von dem Versteifungssteg aufgespannte Ebene 47 hinaus. Dies ist etwa dann vorteilhaft, wenn der Raum an der Spülbehälteraußenseite knapp bemessen ist.

Ein Leuchtflächenelement 8 lässt sich insbesondere so gestalten, dass es neben seiner Leuchtfunktion weitere Funktionen erfüllt, etwa die Steifigkeit und mechanische Festigkeit der jeweiligen Wand erhöht oder resistent gegenüber den während des Reinigungsbetriebs im Spülraum herrschenden Bedingungen ist. Nachteilig dabei ist, dass derartige Zusatzfunktionen bei marktüblichen Leuchtflächenelementen oft nicht gegebenen sind, so dass Spezialentwicklungen erforderlich sind. Um dies zu vermeiden werden daher vorzugsweise über die Leuchtfunktion hinausgehende Anforderungen mit Hilfe von wenigstens einem auf einer Seite des Leuchtflächenelements 8 angeordneten, die Durchbrechung überdeckenden transparenten, transluzenten oder reflektierenden Flächenelements FE realisiert. Das jeweilige Flächenelement FE ist jedoch nicht großflächig etwa nach Art einer Laminierung mit dem Leuchtflächenelement verbunden. Vielmehr sind das Leuchtflächenelement und das diesem jeweilig zugeordnete Flächenelement FE durch einen Luftspalt 49a, 49b voneinander getrennt. Die Spaltbreite des Luftspalts 49a, 49b ist größer als 1 µm. Das Auftreten von störenden Hell-Dunkelzonen aufgrund von Interferenzerscheinungen, sog. Newton'sche Ringe, ist dadurch verhindert. Daneben kann der Luftspalt 49a, 49b auch zur thermischen Isolierung dienen. Im Luftspalt 49a, 49b vorhandene Luft kann als Isolator wirken. Wenn die Spaltbreite des Luftspalts 49a, 49b auf maximal 2 cm begrenzt wird, kann die Bildung von Luftkonvektion, welche die Isolationswirkung des Luftpolsters im Luftspalt verringern würde, verhindert werden.

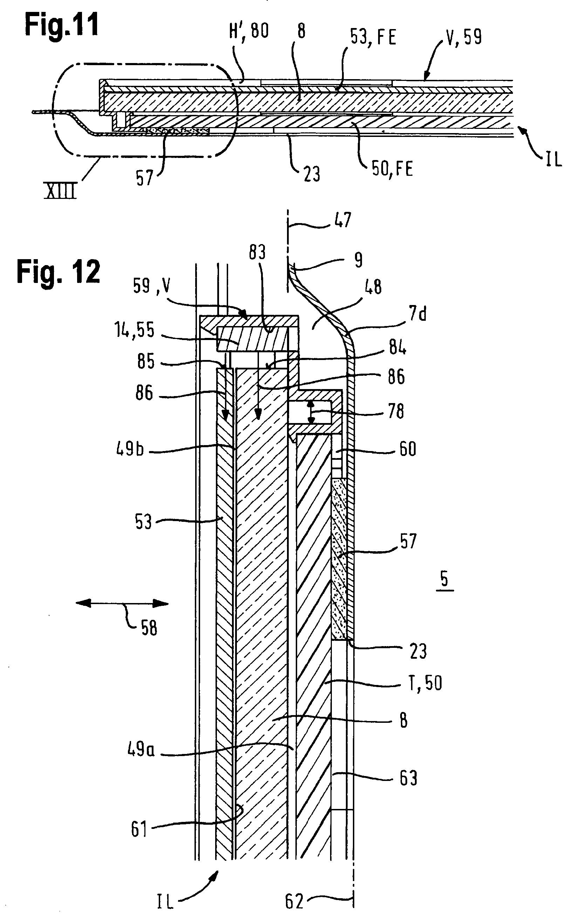

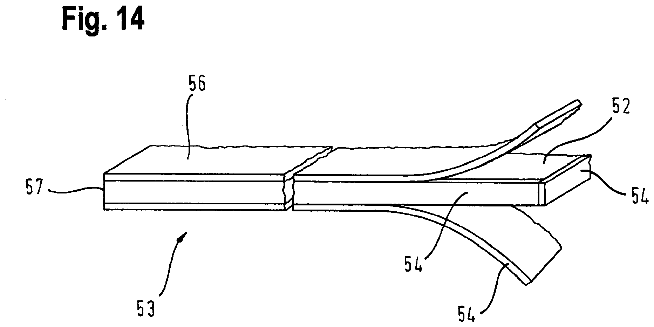

Bei dem in Fig. 11 bis 14 gezeigten Ausführungsbeispiel ist jedem Leuchtflächenelement 8 auf seiner Spülraumseite ein Flächenelement FE in Form einer Vorsatzplatte 50 und/oder auf seiner dem Spülraum abgewandten Seite ein reflektierendes Flächenelement FE in Form einer Reflektorfolie 53 jeweils unter Freilassung eines Luftspalts 49a, 49b zugeordnet. Dabei beträgt z.B. die Spaltbreite des Luftspalts 49a 0,5mm und die Spaltbreite des Luftspalts 49b 0,1 mm beträgt. Die Vorsatzplatte 50 weist etwa eine Dicke von 2 mm auf und besteht aus einem Kunststoff, der resistent gegenüber den während des Betriebs im Spülraum verwendeten Chemikalien ist, z.B. aus PMMA oder Polyamid. Die Reflektorfolie 53 weist, wie Fig. 14 zu entnehmen ist, vorzugsweise einen mehrschichtigen Aufbau auf. Sie umfasst eine Basisfolie 52 aus transparentem oder transluzentem Material, z.B. aus einem Polyacrylat, deren dem Spülraum 5 abgewandte Seite mit einem Reflektorfilm 54 versehen ist, dessen reflektierende Eigenschaft z.B. auf eine Beschichtung mit weißer Farbe, beispielsweise mit TiO₂, oder auf eine Metallbedampfung zurückgeht. Die Einkopplung von Licht in das Leuchtflächenelement 8 erfolgt über eine von dessen Stirnseiten 84. Dabei ist die entsprechende Lichtquelle 14, vorzugsweise eine stirnseitig am Leuchtflächenelement 8 positionierte LED-Leiste 55, so bemessen bzw. ausgerichtet, dass von ihr abgestrahltes Licht nicht nur stirnseitig in das Leuchtflächenelement 8, sondern gleichzeitig auch über eine Stirnseite 85 der Reflektorfolie 53 in diese, d.h. hauptsächlich in die Basisfolie 52, eingekoppelt wird. Im Gegensatz zu einer stirnseitigen Lichteinkopplung ausschließlich in das Leuchtflächenelement 8, bei der lediglich über die dem Spülraum 5 abgewandte Seite 61 des Leichtflächenelements 8 austretendes Licht durch die Reflektorfolie 53 wieder in Richtung zum Spülraum 5 zurückgeworfen wird, hat sich überraschenderweise gezeigt, dass mit der vorgeschlagenen Ausgestaltung eine hohe Lichtausbeute und eine sehr gleichmäße Ausleuchtung mit hoher Lichtstärke erreicht werden kann. In diesem Sinne ist es vorteilhaft, wenn die nicht von dem Licht der Lichtquelle beaufschlagten Stirnseiten der Reflektorfolie 53 mit einem Band aus reflektierenden Material, etwa einem Reflektorfilm 54 der o.g. Art versehen sind. Dadurch ist sichergestellt, dass praktisch das gesamte über die Stirnseite der Reflektorfolie 53 eingekoppelte Licht zur Erleuchtung des Leuchtflächenelements 8 bzw. zur Ausleuchtung des Spülraums 5 zur Verfügung steht.

Bei einer weiteren bevorzugten Ausgestaltung der Reflektorfolie 53 ist deren dem Spülraum 5 zugewandte Seite mit wenigstens einer Diffusorschicht 56, also einer lichtstreuenden Folie oder Scheibe, versehen. Der oben beschriebene Effekt einer gleichmäßigen Ausleuchtung Spülraums 5 wird auf diese Weise weiter verstärkt.

Für die Fixierung eines Leuchtflächenelements 8 und/oder eines dem Leuchtflächenelement beigeordneten, die Durchbrechung überdeckenden Flächenelements FE, etwa einer Vorsatzplatte 50, am Fixierflansch 16 kommen diverse Möglichkeiten in Betracht. Bevorzugt ist jedoch eine Fixierung derart, dass eine auf unterschiedliche Wärmedehnungen beruhende, sich parallel zu der von dem Fixierflansch 16 aufgespannten Ebene 62 erstreckende Relativbewegung zwischen dem Leuchtflächenelement 8 und/oder dem Flächenelement und dem Fixierflansch 16 ausgeglichen wird. Bei einer besonders bevorzugten Ausführungsvariante wird dies dadurch bewerkstelligt, dass das Leuchtflächenelement 8 und/oder das Flächenelement FE, besonders die o.g. Vorsatzplatte 50 unter Zwischenlage einer elastischen, durch die in Rede stehende Relativbewegung bedingte Scherkräfte aufnehmenden Ausgleichsschicht 57 klebend mit dem Fixierflansch 16 verbunden sind. Zur Klebeverbindung kann die Ausgleichsschicht 57, die vorzugsweise in Form eines O-Rings ausgestaltet ist, auf ihrer dem Fixierflansch 16 zugewandten und ihrer Fixierflansch 16 abgewandten Seite mit Klebstoff, beispielweise einem Acrylkleber, versehen sein oder versehen werden, also etwa nach Art eines doppelseitigen Klebebands ausgebildet sein. Die Scherkräfte aufnehmende Wirkung der Ausgleichsschicht 57 ist dann besonders gut ausgeprägt, wenn diese zumindest teilweise, vorzugsweise vollständig von einem Kunststoffschaum, insbesondere einem Polyolefinschaum gebildet ist, da die zellige Raumstruktur des Schaums in besonders hohem Maße die Aufnahme von Scherkräften gestattet. Allerdings ist eine gewisse Mindestdicke der Ausgleichsschicht von 0,2 mm bis 0,4 mm erforderlich. Die maximale Dicke der Ausgleichsschicht sollte dabei zweckmäßigerweise 2 mm, besser 1 mm nicht überschreiten.

Wie bereits weiter oben angedeutet wurde, ist es vorteilhaft, einem Leuchtflächenelement 8 wenigstens ein die jeweilige Durchbrechung überdeckendes Flächenelement FE zuzuordnen, wobei hier insbesondere die bereits genannte Vorsatzplatte 50 zu erwähnen ist, welche vorzugsweise auf der dem Spülraum 5 abgewandten Seite des Fixierflansches 16 angebracht ist. Die Vorsatzplatte 50 kann aus einem vergleichsweise stabilen Material gefertigt werden, so dass sie einen Beitrag zur Stabilität einer zumindest teilweise durch ein Leuchtflächenelement 8 ersetzten Wand 7 leisten kann. Insbesondere ist es vorteilhaft, wenn zusätzlich oder alternativ für die Vorsatzplatte 50 insgesamt oder zumindest für deren dem Spülraum 5 zugewandten Oberflächenschicht ein Material gewählt wird, das beständig gegenüber den im Spülraum während des Betriebs der Geschirrspülmaschine eingesetzten Chemikalien ist. Die Auswahl des Leuchtflächenelements 8 selbst kann dann ausschließlich nach optischen bzw. beleuchtungstechnischen Gesichtspunkten, ohne Rücksicht auf mechanische oder chemische Eigenschaften oder Anforderungen, erfolgen.

Hinsichtlich der oben geschilderten Problematik einer durch unterschiedliche Wärmeausdehnung hervorgerufenen Relativbewegung zwischen dem Fixierflansch 16 und einem damit verbundenen Leuchtflächenelement 8 und/oder Flächenelement FE ist es besonders vorteilhaft, wenn die genannten Elemente einen Träger T bilden, an dem ein Leuchtflächenelement 8 und/oder ein primär nicht Beleuchtungszwecken dienendes Flächenelement FE fixiert ist, ohne dabei mit der Wand wie z.B. 7d bzw. dem Spülbehälter 3 verbunden zu sein. Wegen der fehlenden mechanischen Verbindung zum Spülbehälter 3 können sich keine Probleme hinsichtlich einer unterschiedlich starken Wärmedehnung an der Verbindungsstelle ergeben. Außerdem ist gerade bei aus Stahl bestehenden Spülbehältern und dem Kunststoffmaterial eines Leuchtflächenelements 8 oder eines sonstigen Flächenelements FE, also dem Träger T, eine ausgeprägte Differenz in der Wärmedehnung der genannten Materialen gegeben, so dass (ohne Gegenmaßnahmen) sich daraus ergebende, die jeweilige Verbindung auf Dauer schwächende Probleme besonders ausgeprägt sind. Wird dagegen ein aus Kunststoffmaterial bestehendes Element am Träger T fixiert, treten aufgrund der ähnlichen Materialien allenfalls nur geringe Unterschiede in der Wärmedehnung auf, was aber wegen der fehlenden Verbindung zum Spülbehälter unproblematisch wäre.

Die gegenseitige Fixierung eines Leuchtflächenelements 8 und wenigstens eines separaten Flächenelements FE, insbesondere die Fixierung eines Leuchtflächenelements 8 und/oder eines Flächenelements FE am Träger T, beispielsweise an der o.g. Vorsatzplatte 50, erfolgt mit Hilfe eines Verbindungselements V, welches vorzugsweise mit einem in Querrichtung 58 zur Wand 7d wirksamen Formschluss mit dem Träger T verbunden ist. Eine solche Verbindungsart ist insbesondere in montagetechnischer Hinsicht vorteilhaft, da sie beispielsweise als Schnappverbindung ausgestaltet werden kann, welche bei der Montage lediglich eine einfache lineare Fügebewegung erfordert. Außerdem lässt sich durch eine Formschlussverbindung insbesondere auf montagetechnisch einfache Weise ein definierter Luftspalt 49a, 49b zwischen den in Rede stehenden Elementen einhalten. Auch die Fixierung von sonstigen Elementen wie einem Leuchtflächenelement 8 oder einem Flächenelement FE, beispielsweise einer Reflektorfolie 53, wird vorzugsweise über einen in Wandquerrichtung 58 wirksamen Formschluss bewerkstelligt, wobei dieser insbesondere durch eine oder mehrere Schnappverbindungen realisiert ist. Dabei lassen sich Leuchtflächenelemente 8 und/oder Flächenelemente FE mit einer einfachen linearen Fügebewegung mit dem Verbindungselement V, das beispielsweise bereits am Träger T fixiert ist, verbinden.

Das Verbindungselement V ist vorzugsweise ein Rahmen 59, welcher einerseits den Träger T, also etwa die Vorsatzplatte 50, und andererseits weitere flächige Elemente, vorzugsweise ein Leuchtflächenelement 8 und/oder ein oder mehrere Flächenelemente FE, umgreift und die genannten Elemente dabei mit einem in Wandquerrichtung 58 wirksamen Formschluss aneinander hält. Der Rahmen 59 hintergreift mit Hintergriffselementen 60 die dem Spülraum 5 zugewandte Seite 63 des Trägers T bzw. der Vorsatzplatte 50. Die Hintergriffselemente 60 sind laschenförmige Wandabschnitte, die sich parallel zu der von dem Rahmen 59 aufgespannten Planebene bzw. parallel zu der vom Versteifungssteg 9 aufgespannten Ebene 47 erstrecken. Die Dicke der Ausgleichsschicht 57 ist so gewählt, dass zwischen dem Fixierflansch 16 und dem Träger T bzw. der Vorsatzplatte 50 ein Spalt 64 frei bleibt, dessen in Wandquerrichtung 58 gemessene Spaltbreite größer ist als die Dicke 70 der Hintergriffselemente 60. Auf diese Weise ist gewährleistet, dass die in Wandquerrichtung 58 elastische Ausgleichsschicht 57 bei der Montage zum Zwecke einer ausreichenden Klebeverbindung zwischen Träger T und Fixierflansch 16 in Wandquerrichtung 58 in gewissem Ausmaß komprimierbar ist, ohne dass dabei der Rahmen 59 mit dem Fixierflansch 16 in Kontakt kommt bzw. das Anpressen der Ausgleichsschicht 57 an den Fixierflansch 16 behindert.

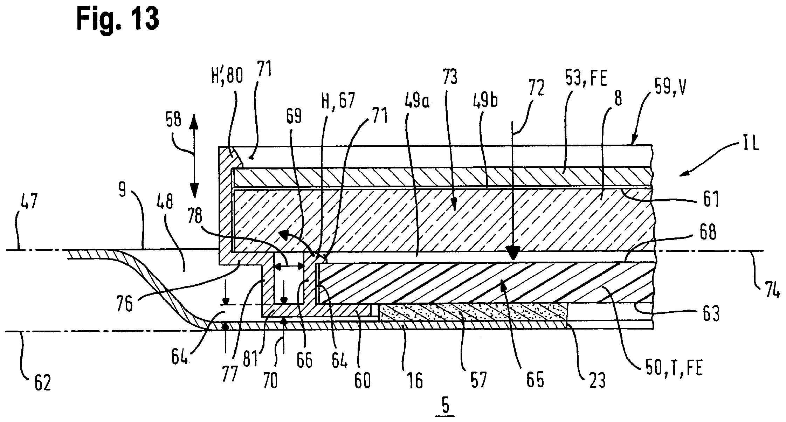

Der Rahmen 59 weist eine erste Aufnahme 65 auf, in welcher der Träger T bzw. die Vorsatzplatte 50 vollständig aufgenommen ist. Die Aufnahme ist seitlich von einer Wand 66 umgrenzt, welche sich in Wandquerrichtung 58 von den Hintergriffselementen 60 weg erstreckt. Die vom Spülraum 5 wegweisenden Freienden der Wand 66 sind zumindest abschnittsweise als Hintergriffselemente H ausgebildet, welche den Träger T auf seiner dem Spülraum 5 abgewandten Seite 68 hintergreifen. Die Hintergriffselemente H sind vorzugsweise in Form in Umfangsrichtung des Rahmens 59 verteilten Hakenleisten 67 ausgebildet. Sie bilden Schnappverbindungselemente, die aufgrund einer vom Spülraum 5 weg weisenden Auflaufschräge 71 beim Einführen eines Trägers T in den Rahmen 59 in Fügerichtung 72 elastisch nach außen bewegt werden (Pfeil 69 in Fig. 13) und am Ende der Fügebewegung durch elastische Rückstellkräfte in ihre Ausgangslage zurückfedern, in der sie den Träger T hintergreifen. Eine eventuelle Relativbewegung zwischen dem Träger T und dem Rahmen 59 aufgrund unterschiedlicher Wärmeausdehnung in der sich parallel zu der vom Fixierflansch 16 aufgespannten Ebene 62 wird durch einen zwischen der Wand 66 und zumindest einer Stirnseite des Trägers T vorhandenen Spalt 64 ermöglicht.

Der Rahmen 59 weist eine weitere Aufnahme 73 auf, welche zur vorzugsweise vollständigen Aufnahme des Leuchtflächenelements 8 dient. Die dem Spülraum 5 abgewandte Seite der Hintergriffselemente H definiert eine Auflageebene 74, an welcher das Leuchtflächenelement 8 anliegt. Der Rahmen 59 ist im Wesentlichen von einer eine Stufe 76 aufweisenden Wand 75 gebildet, wobei die dem Spülraum 5 abgewandte Fläche der Stufe 76 in der Auflageebene 74 verläuft. Im Montagezustand liegt daher das Leuchtflächenelement 8 auf den Hintergriffselementen H und auf der Stufe 76 auf. Die Abmessung der Hintergriffselemente H in Wandquerrichtung 58 definiert die Spaltbreite des zwischen dem Leuchtflächenelement 8 und dem Träger T bzw. der Vorsatzplatte 50 vorhandenen Spalt 49a. Ein sich von der Stufe 76 in Richtung Spülraum 5 erstreckender Wandabschnitt 77 der Wand 75 umgreift die die Hintergriffselemente H aufweisende Wand 66 mit seitlichem Abstand 78. An das dem Spülraum 5 zugewandte Freiende des Wandabschnitts 77 ist eine parallel zur Auflageebene 74 verlaufende Wand 81 angeformt, von welcher sich die Wand 66 in Richtung zur Aufnahme 73 weg erstreckt.

An den vom Spülraum 5 wegweisenden Freienden der gestuften Wand 75 sind Hintergriffselemente H'angeformt, welche die dem Spülraum 5 abgewandte Seite 79 des Leuchtflächenelements 8 zumindest mittelbar hintergreifen. Bei einem unmittelbaren Hintergriff beaufschlagen die Hintergriffselemente H', die vorzugsweise als in Umfangsrichtung des Rahmens 59 verteilte Hakenleisten 80 ausgebildet sind, die dem Spülraum 5 abgewandte Seite 61 des Leuchtflächenelements direkt. Bei dem in Fig. 11 bis 13 gezeigten Ausführungsbeispiel ist unter Freilassung des Luftspalts 49b ein Flächenelement FE, insbesondere die o.g. Reflektorfolie 53 angeordnet. Der Luftspalt 49b wird durch randständige Abstandhalter (nicht gezeigt) definiert. Die Hintergriffselemente H' hintergreifen die Reflektorfolie 53, liegen somit an dieser an. Die Hakenleisten 80 sind an ihrer dem Spülraum 5 abgewandten Seite ebenfalls mit einer das Einbringen des gegebenenfalls mit einer Reflektorfolie 53 versehenen Leuchtflächenelements 8 in Fügerichtung 72 erleichternden Auflaufschräge 71 ausgebildet. Die Hintergriffselemente H'bzw. die Hakenleisten 80 wirken daher wie Schnappverbindungselemente bzw. sind als solche ausgebildet.

Dem Leuchtflächenelement 8 ist eine Lichtquelle 14 in Form einer LED-Leiste 55 zugeordnet, wobei diese in einer sich zum Spülraum 5 öffnenden Aufnahme 83 angeordnet ist. Die Lichtquelle 14 bzw. die LED-Leiste 55 ist so bemessen und angeordnet, dass von ihr ausgehendes Licht sowohl in die ihr zugewandte Stirnseite 84 des Leuchtflächenelements 8 als auch in die ihr zugewandte Stirnseite 85 der Reflektorfolie 53 eingekoppelt wird, was durch die Pfeile 86 in Fig. 12 angedeutet ist.

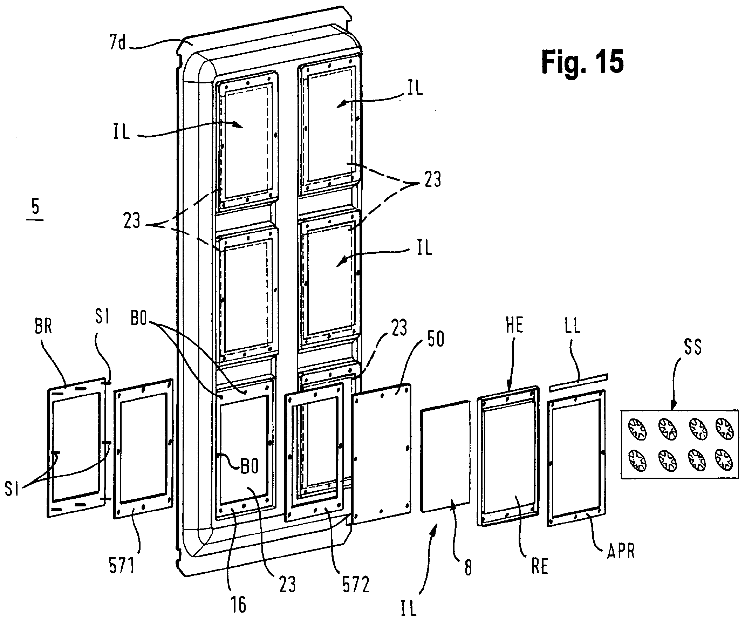

Figur 15 zeigt schematisch in perspektivischer Darstellung ein weiteres vorteilhaftes Ausführungsbeispiel für eine beleuchtete Wand, die den Spülraum begrenzt, insbesondere die Rückwand des Spülbehälters der Geschirrspülmaschine von Figur 1 und zwar von außen betrachtet, wobei zusätzlich exemplarisch die Einzelkomponenten eines einzelnen Beleuchtungsfeldes der Wand in Explosionsdarstellung abgebildet sind. In der Rückwand 7d sind nebeneinander zwei vertikale Reihen von je drei übereinander angeordneten Durchbrüchen 23 vorgesehen, d.h. insgesamt sind 6 Durchbrüche in der Rückwand 7d vorhanden. Der jeweilige Durchbruch 23 ist rechteckförmig ausgebildet. Zwischen den einzelnen Durchbrüchen 23 sind vertikale und waagerechte Versteifungsstege der vorzugsweise metallischen Wand 7d stehen geblieben, so dass deren Steifigkeit trotz der Durchbrüche ausreichend sichergestellt ist. Jeder Durchbruch ist von außen, d.h. auf der dem Spülraum 5 abgewandten Seite der Wand 7d mit einem Illuminationselement IL versehen. Das Illuminationselement IL umfasst vom Inneren des Spülraums 5 nach außen gesehen die spüllaugenbeständige, d.h. allgemein ausgedrückt hinsichtlich der beim Spülen jeweilig verwendeten Chemikalien stabile bzw. resistente Abdeckplatte bzw. Vorsatzplatte 50. Diese ist auf die Rückseite, d.h. Außenseite der Wand 7d mittels einer rahmenförmigen Klebemaske 572 geklebt. Dabei liegt die Klebemaske auf einem um den Durchbruch 23 herum verlaufenden Fixierflansch 16 der Wand 7d auf. Dieser ist vorzugsweise muldenförmig zum Spülraum hin vertieft ausgebildet und nimmt die Vorsatzplatte 50, insbesondere weitgehend flächenbündig, auf. Die Vorsatzplatte 50 ist also mittels der Klebemaske 572 am den Durchbruch 23 umlaufenden Rand der Wand 7d fixiert. Sie ist aus einem vorzugsweise lichtdurchlässigen, insbesondere aber blickundurchlässigen, Kunststoffmaterial wie z.B. Polyamid hergestellt. Die Klebemaske 572 bildet gleichzeitig eine flüssigkeitsdichte Abdichtung zwischen der Vorsatzplatte 50 und der Randzone 16 der Rückwand 7d ringsum den Durchbruch 23. Zudem dient sie als Ausgleichsschicht zur Aufnahme von Scherkräften, die etwaig durch unterschiedliche Wärmedehnungen der Rückwand 7d und der Vorsatzplatte 50 auftreten können. Solche unterschiedliche Wärmedehnungen können durch unterschiedliche Materialien für die Rückwand 7d wie z.B. aus Stahl sowie die Vorsatzplatte 50 wie z.B. aus Kunststoff bedingt sein, da diese voneinander verschiedenen Wärmeausdehnungskoeffizienten aufweisen.

Das Illuminationselement IL weist hinter der Vorsatzplatte 50 (von innen nach außen betrachtet) das Leuchtflächenelement bzw. Leuchtpanel 8 auf. Das Leuchtflächenelement 8 ist in einem als Haltelement HE dienenden Abdeckrahmen frontseitig gehaltert. Das Halteelement HE weist eine geschlossene Rückwand RE auf, die als Reflektorflächenelement ausgebildet ist. Z.B. kann die Rückwand des Halteelements HE auf ihrer dem Leuchtpanel 8 zugewandten Seite mit einer weißen Farbschicht oder einem weißen Überzug als Licht reflektierender Hintergrund versehen sein. Der Abdeckrahmen HE nimmt zugleich auch eine Lichtleiste wie z.B. LED- Leiste LL oder eine sonstige langgestreckte Lichtquelle derart auf, dass Licht entlang der Längserstreckung einer Stirnseite in diese, insbesondere in die obere Stirnseite des hier im Ausführungsbeispiel rechteckförmigen Leuchtpanels 8 eingekoppelt werden kann. Das Leuchtpanel 8 ist im Abdeckrahmen HE zweckmäßigerweise derart gehaltert, dass zwischen ihm und der lichtreflektierenden Rückwand RE ein Luftspalt vorgegebener Spaltbreite vorhanden ist, um unerwünschte Leuchterscheinungen wie z.B. Newton'sche Ringe zu vermeiden und eine hinsichtlich der Gesamtfläche des Leuchtpanels 8 weitgehend homogene, gleichmäßige Illumination sicherzustellen. An jeder Ortsstelle des Leuchtpanels 8 leuchtet dies also vorzugsweise in etwa mit derselben Leuchtstärke.

Hier im Ausführungsbeispiel von Figur 15 ist der Abdeckrahmen HE mit dem von ihm gehalterten Leuchtpanel 8 vorteilhafterweise mittels einer mechanischen Befestigung an der Außenseite der Rückwand 7d von innen nach außen betrachtet hinter der Vorsatzplatte 50, die den Durchbruch 23 mittels der Klebemaske 572 flüssigkeitsdicht abdeckt bzw. verschließt, mit einem vorgegebenen Spaltabstand versetzt fixiert. Zur mechanischen Befestigung ist hier im Ausführungsbeispiel auf der Innenseite, d.h. dem Spülraum 5 zugewandten Seite der Rückwand 7d ein vorzugsweise rechteckförmiger Blendrahmen BR vorgesehen, der mittels einer hier rechteckförmigen Klebemaske 571 auf den Wandrand ringsum den hier rechteckförmigen Durchbruch 23 spülraumseitig fixiert ist. Der Blendrahmen BR weist an seiner Rückseite mehrere Stifte, Zapfen oder Bolzen SI auf, die durch entsprechende Bohrungen oder Löcher BO in der Rückwand 7d, der Vorsatzplatte 50, im Abdeckrahmen HE sowie in einem ggf. zusätzlich vorhandenen Anpressrahmen APR hindurchgeführt sind und mittels Sicherungsscheiben SS an der Außenseite des Abdeckrahmens HE gegengehaltert sind. Der Abdeckrahmen HE mit dem in ihm gehalterten Leuchtpanel 8 ist also in einem vorgegebenen Freiraumabstand hinter der Vorsatzplatte 50 durch eine mechanische Befestigung an der Außenseite der Rückwand 7d fixiert.

Ggf. kann der Spülraum innenseitig vorgesehene Blendrahmen BR sowie die zu dessen Fixierung vorgesehene Klebmaske 571 entfallen. Anstelle von diesen können Stifte, Zapfen oder Bolzen SI auf der Außenseite der Wand 7d an der Randzone 16 der Rückwand um den Durchbruch 23 z.B. angeschweißt oder in sonstiger Weise festmontiert sein. Die mechanische Fixierung der Komponenten wie z.B. 50, HE des Illuminationselements IL kann dann in entsprechender Weise wie oben erläutert mittels einer Gegenhalterung erfolgen.

Durch die Kombination von Klebeverbindung und zusätzlicher mechanischer Befestigung des Illuminationselements IL an der Beleuchtungswand wie z.B. 7d ist deren Gesamtkonstruktion weitgehend flüssigkeitsdicht ausgeführt sowie gegen Stöße von außen und innen weitgehend unempfindlich. Die mechanische Befestigung des Illuminationselements an der Wand sorgt für eine Entlastung der abdichtenden Klebeverbindung zwischen der Vorsatzplatte 50 und der Auflagezone, insbesondere dem Fixierflansch 16, der den jeweiligen Durchbruch 23 umgibt.

In Abwandlung zu diesen beiden vorstehenden, vorteilhaften Konstruktionen kann der Abdeckrahmen HE insbesondere derart ausgebildet sein, dass er in einem definierten Freiraumabstand vor dem Leuchtpanel 8, d.h. vor dessen dem Spülraum zugewandten Seite, auch die laugenstabile Vorsatzplatte 50 aufnimmt und hält. Dabei ist zwischen dem dem Spülraum zugewandten Außenrand der Vorsatzplatte 50 und der Auflagezone 16 die Klebeverbindung 572 vorgesehen sowie das Illuminationselement IL zusätzlich an der Außenseite der Wand mittels einer geeigneten mechanischen Befestigung fixiert.

Dieser Gesamtaufbau des Illuminationselements IL, der nach einer vorteilhaften Ausführungsvariante (von innen nach außen betrachtet) den Abdeckrahmen HE, die Vorsatzplatte 50, dahinter mit vorgegebenen Spaltabstand das Leuchtpanel 8 sowie hinter diesem mit vorgegebenen Spaltabstand das Reflektorflächenelement RE umfasst, kann nach einer vorteilhaften Alternative ggf. lediglich mittels der Klebemaske 572 an dem den Durchbruch 23 ringsum einfassenden, rückseitigen Fixierrand, insbesondere Fixierflansch 16 der Rückwand 7d des Spülbehälters fixiert sein. Eine zusätzliche mechanische Befestigung fehlt also bei dieser Variante.

Zusammenfassend betrachtet kann es somit zweckmäßig sein, wenn die jeweilig zur Illumination vorgesehene Wand, die den im Spülbetrieb nass werdenden Spülraum begrenzt, eine Vielzahl von Illuminationselementen aufweist, die zugehörige Durchbrüche in der Wand überdecken oder verschließen. Die Durchbrüche bleiben durch verbleibende Stege des Wandmaterials wie z.B. Stahlblech voneinander getrennt. Insgesamt ergibt sich somit eine Illuminationsstruktur, die zu einem Leuchten bzw. Illuminieren des überwiegenden Teils der Gesamtfläche der Wand führt und dennoch für den praktischen Betrieb der Geschirrspülmaschine ausreichend stabil ist. Insbesondere kann so die Rückwand des Spülbehälters großflächig, insbesondere zwischen 50% und 95% ihrer Gesamtfläche, illuminiert sein.

### BEZUGSZEICHENLISTE

- 1: Geschirrspülmaschine
- 3: Spülbehälter
- 4: Außenseite
- 5: Spülraum
- 6: Beladeöffnung
- 7, 7a, 7b, 7c, 7d: Wände
- 8: Leuchtflächenelement
- 9: Versteifungssteg
- 10: Außenwand
- 11: Tür
- 12: Zuführleitung
- 13: Gehäuse
- 14: Lichtquelle
- 15: Randbereich
- 16: Fixierflansch
- 17: Montagefläche
- 18: Linie
- 19: Trennfuge
- 20: Dichtung
- 21: Klebstoffschicht
- 22: Trennfuge
- 23: Durchbruch
- 24: Außenseite bzw. Außenwandfläche
- 25: Rand
- 26: Trennfuge
- 27: Überlappungsbereich
- 28: Klebstoffschicht
- 29: Innenseite bzw. Innenwandfläche
- 36: Farbschicht
- 37: Schutzschicht
- 38: Lichtkegel
- 39: Stirnseite
- 40: Übertragungselement
- 42: Trennfuge
- 43: Lichtaustrittsfläche
- 44: Abstand
- 45: Lichtkegel
- 46: Umlenkelement
- 47: Ebene
- 48: Vertiefung
- 49: Luftspalt
- 50: Vorsatzplatte
- 52: Basisfolie
- 53: Reflektorfolie
- 54: Reflektorfilm
- 55: LED-Leiste
- 56: Diffusorschicht
- 57: Ausgleichsschicht
- 58: Wandquerrichtung
- 59: Rahmen
- 60: Hintergriffselement
- 61: Seite
- 62: Ebene
- 63: Seite
- 64: Spalt
- 65: Aufnahme
- 66: Wand
- 67: Hakenleiste
- 68: Seite
- 69: Pfeil
- 70: Dicke
- 71: Auflaufschräge
- 72: Fügerichtung
- 73: Aufnahme
- 74: Auflageebene
- 75: gestufte Wand
- 76: Stufe
- 77: Wandabschnitt
- 78: Abstand
- 80: Hakenleiste
- 81: Wand
- 83: Aufnahme
- 84: Stirnseite
- 85: Stirnseite
- 86: Pfeil
- 571, 572: Klebemaske
- AK: Auskoppelstellen
- APR: Anpressrahmen
- BO: Bohrungen, Löcher
- BR: Blendrahmen
- IL: Illuminationselement
- FP: Farbpartikel
- H: Hintergriffselement
- HE: Abdeckrahmen, Halteelement
- LS1- LSn: ausgekoppelte Lichtstrahlen
- LS1': sich im Material des Leuchtflächenelements fortpflanzender Lichtstrahl
- LL: Lichtleiste
- RE: reflektierende Rückwand
- SI: Stifte, Bolzen
- SS: Sicherungsscheiben

## Patentansprüche

1. Geschirrspülmaschine (1) mit einem mehrere Wände (7) aufweisenden, einen Spülraum (5) umgrenzenden Spülbehälter (3), wobei mindestens eine der Wände (7), insbesondere die Rückwand (7d), des Spülbehälters (4) zumindest zwei jeweils von einem Leuchtflächenelement (8) überdeckte Durchbrüche (23) und einen die Durchbrüche voneinander trennenden Versteifungssteg (9) aufweist, wobei das jeweilige Leuchtflächenelement (8) durch ein plattenförmiges oder paneelartiges Element gebildet ist, wobei die Leuchtflächenelemente eine Gesamtfläche aufweisen, die mindestens 20 % der Wandfläche der Wand (7d) entspricht, und wobei auf wenigstens einer Seite des jeweiligen Leuchtflächenelements (8) wenigstens ein den jeweiligen Durchbruch (23) überdeckendes transparentes, transluzentes oder reflektierendes Flächenelement (FE) angeordnet ist, wobei die genannten Elemente durch einen Luftspalt (49a, 49b), dessen Spaltbreite größer als 1 µm und von maximal 2 cm ist, voneinander getrennt sind.

2. Geschirrspülmaschine nach Anspruch 1, **dadurch gekennzeichnet, dass** das jeweilige Leuchtflächenelement (8) mittel- oder unmittelbar an einem den jeweiligen Durchbruch (23) umgrenzenden, einen Fixierflansch (16) bildenden Rand der Wand (7d), insbesondere durch eine Klebeverbindung und/oder mechanische Befestigung, fixiert ist.

3. Geschirrspülmaschine nach mindestens einem der vorhergehenden Ansprüche, **dadurch gekennzeichnet, dass** die Leuchtflächenelemente (8) insgesamt mindestens 50 %, insbesondere mindestens 75 %, bevorzugt zwischen 80 % und 95 %, der Fläche der Wand (7d) ersetzen.

4. Geschirrspülmaschine nach mindestens einem der vorhergehenden Ansprüche, **dadurch gekennzeichnet, dass** das jeweilige Leuchtflächenelement (8) zumindest auf seiner dem Spülraum (4) zugewandten Innenwandfläche (29) weitgehend planflächig, insbesondere glattflächig, ausgebildet ist.

5. Geschirrspülmaschine nach mindestens einem der vorhergehenden Ansprüche, **dadurch gekennzeichnet, dass** das jeweilige Leuchtflächenelement (8) derart lichtleitend und/oder lichtabstrahlend ausgebildet ist, dass eine, insbesondere weitgehend homogene, Hintergrundbeleuchtung bereitgestellt ist.

6. Geschirrspülmaschine nach mindestens einem der vorhergehenden Ansprüche, **dadurch gekennzeichnet, dass** das jeweilige Leuchtflächenelement (8) derart lichtleitend und/oder lichtabstrahlend ausgebildet ist, dass ein oder mehrere Lichtstrahlen (38, 45) wenigstens einer außerhalb des Spülraums (5) angeordneten Lichtquelle (14) in das Leuchtflächenelement (8) an mindestens einer Einkoppelstelle (39) einkoppelbar sind, ein oder mehrere eingekoppelte Lichtstrahlen (LS1') im Leuchtflächenelement (8) ausgehend von ihrer jeweiligen Einkoppelstelle (39) weg mit einer parallel zur dem Spülraum (5) zugewandten Innenwandfläche (29) des Leuchtflächenelements (8, 9) verlaufenden Fortpflanzungsrichtung (EFR) ausbreitungsfähig sind, und dass von den ein oder mehreren, sich derart fortpflanzenden Lichtstrahlen (LS1'), insbesondere quer zu deren Fortpflanzungsrichtung (EFR), aus der dem Spülraum (5) zugewandten Innenwandfläche (29) des Leuchtflächenelements (8) ein oder mehrere Lichtstrahlen (LS1) an ein oder mehreren, von der jeweiligen Einkoppelstelle (39) verschiedenen Auskoppelstellen (AK) in den Spülraum (5) hinein auskoppelbar sind, jedoch das Leuchtflächenelement (8) vom Spülraum (5) aus betrachtet weitgehend blickdicht ausgebildet ist.

7. Geschirrspülmaschine nach mindestens einem der vorhergehenden Ansprüche, **dadurch gekennzeichnet, dass** das jeweilige Leuchtflächenelement (8) und/oder ein dem Leuchtflächenelement beigeordnetes, den jeweiligen Durchbruch (23) überdeckendes Flächenelement (FE) an der Wand (7d), insbesondere an deren den jeweiligen Durchbruch umgrenzendem Fixierflansch (16), derart fixiert ist oder sind, dass eine auf unterschiedliche Wärmedehnungen beruhende, sich parallel zu der von der Wand (7d), insbesondere zum deren jeweiligen Durchbruch (23) umgrenzenden Fixierflansch (16), aufgespannten Ebene erstreckende Relativbewegung zwischen dem Leuchtflächenelement (8) bzw. dem Flächenelement (FE) und der Wand (7d), insbesondere deren den jeweiligen Durchbruch (23) umgrenzendem Fixierflansch (16), ausgeglichen ist.

8. Geschirrspülmaschine nach Anspruch 7, **dadurch gekennzeichnet, dass** das Leuchtflächenelement (8) und/oder das Flächenelement (FE) unter Zwischenlage einer elastischen, durch die Relativbewegung bedingte Scherkräfte aufnehmenden Ausgleichsschicht (57), insbesondere Dichtungsmittelschicht (20, 21, 28), klebend mit der Wand (7d), insbesondere deren den jeweiligen Durchbruch (23) umgrenzendem Fixierflansch (16), verbunden ist.

9. Geschirrspülmaschine nach mindestens einem der vorhergehenden Ansprüche, **dadurch gekennzeichnet, dass** an dem den jeweiligen Durchbruch (23) umgrenzenden Fixierflansch (16) der Wand (7d) eine den Durchbruch (23) überdeckende, insbesondere spüllaugenbeständige, Vorsatzplatte (50) aus einem transparenten oder transluzenten Material befestigt ist, wobei auf deren dem Spülraum (5) abgewandten Seite ein Leuchtflächenelement (8) angeordnet ist.

10. Geschirrspülmaschine nach mindestens einem der vorhergehenden Ansprüche, **dadurch gekennzeichnet, dass** ein das jeweilige Leuchtflächenelement (8) und/oder ein diesem beigeordnetes Flächenelement (FE) aufnehmendes Halteelement, insbesondere ein das Leuchtflächenelement (8) und/oder das Flächenelement (FE) umfassender Rahmen (59), vorgesehen ist.

11. Geschirrspülmaschine nach mindestens einem der vorhergehenden Ansprüche, **dadurch gekennzeichnet, dass** auf der dem Spülraum (5) abgewandten Seite des jeweiligen Leuchtflächenelements (8) eine den jeweiligen Durchbruch (23) überdeckende, Licht und/oder Wärmestrahlung reflektierende Reflektorfolie (53) als Flächenelement angeordnet ist.

12. Geschirrspülmaschine nach mindestens einem der vorhergehenden Ansprüche, **dadurch gekennzeichnet, dass** das jeweilige Leuchtflächenelement (8) und/oder ein diesem beigeordnetes Flächenelement (FE) auf der dem Spülraum (5) abgewandten Außenseite der jeweiligen Wand (7d) deren jeweiligen Durchbruch (23) von hinten abdeckend angebracht ist.

13. Geschirrspülmaschine nach mindestens einem der vorhergehenden Ansprüche, **dadurch gekennzeichnet, dass** in Breitenrichtung der jeweiligen Wand (7d) betrachtet eine Reihe von mindestens zwei Durchbrüchen (23), die jeweils von einem Leuchtflächenelement (8) und/oder einem diesem beigeordneten Flächenelement (FE) überdeckt oder verschlossen sind, und/oder dass in Höhenrichtung der Wand (7d) betrachtet eine Reihe von mindestens zwei Durchbrüchen (23) vorgesehen sind, die jeweils von einem Leuchtflächenelement (8) und/oder einem diesem beigeordneten Flächenelement (FE) überdeckt oder verschlossen sind.

## Claims

1. Dishwasher (1) having a washing container (3) that comprises a plurality of walls (7) and encloses a washing chamber (5), wherein at least one of the walls (7) of the washing container (4), in particular the rear wall (7d) thereof, comprises at least two apertures (23), each covered by a planar lighting element (8), and a reinforcing member (9) separating the apertures from one another, wherein the planar lighting element (8) concerned is formed by a slab-shaped or panel-like element, wherein the planar lighting elements have a total surface area that equals at least 20 % of the wall surface area (7d), and wherein at least one transparent, translucent or reflective planar element (FE) covering the aperture (23) concerned is arranged on at least one side of the planar lighting element (8) concerned, wherein said elements are separated from one another by an air gap (49a, 49b) having a gap width greater than 1 µm and no greater than 2 cm.

2. Dishwasher according to claim 1, **characterised in that** the planar lighting element (8) concerned is fixed indirectly or directly in particular by an adhesive bond and/or mechanical fastening to an edge of the wall (7d), which edge encloses the aperture (23) concerned and forms a fixing flange (16).

3. Dishwasher according to at least one of the preceding claims, **characterised in that** the planar lighting elements (8) in total replace at least 50 %, in particular at least 75 %, preferably between 80 % and 95 %, of the surface area of at least one wall (7d).

4. Dishwasher according to at least one of the preceding claims, **characterised in that** the planar lighting element (8) concerned is designed to have a largely flat, in particular smooth, surface at least on its inner wall surface (29) that faces the washing chamber (4).

5. Dishwasher according to at least one of the preceding claims, **characterised in that** the planar lighting element (8) concerned is designed to guide and/or emit light such that a backlight is provided, in particular a backlight that is largely homogeneous.

6. Dishwasher according to at least one of the preceding claims, **characterised in that** the planar lighting element (8) concerned is designed to guide and/or emit light such that one or more light beams (38, 45) from at least one light source (14) arranged outside the washing chamber (5) can be coupled into the planar lighting element (8) at at least one coupling-in point (39), one or more coupled-in light beams (LS1') in the planar lighting element (8) can propagate away from their respective coupling-in points (39) in a direction of propagation (EFR) parallel to the inner wall surface (29) of the planar lighting element (8, 9) that faces the washing chamber (5), and such that of the one or more light beams (LS1') propagating in this way, one or more light beams (LS1) can be coupled out of the inner wall surface (29) of the planar lighting element (8) that faces the washing chamber (5), in particular at right angles to their direction of propagation (EFR), into the washing chamber (5) at one or more coupling-out points (AK) that differ from the respective coupling-in points (39), although the planar lighting element (8) is designed to be largely opaque viewed from the washing chamber (5).

7. Dishwasher according to at least one of the preceding claims, **characterised in that** the planar lighting element (8) concerned and/or a planar element (FE) associated with the planar lighting element and covering the aperture (23) concerned, is or are fixed to the wall (7d), in particular to the fixing flange (16) thereof that encloses the aperture, in such a way as to accommodate a relative movement between the planar lighting element (8) or the planar element (FE) and the wall (7d), in particular the fixing flange thereof (16) that encloses the aperture, which movement is caused by different thermal expansions and runs parallel to the plane spanned by the wall (7d), in particular by the fixing flange (16) thereof that encloses the aperture (23).

8. Dishwasher according to claim 7, **characterised in that** the planar lighting element (8) and/or the planar element (FE) is adhesively bonded to the wall (7d), in particular to the fixing flange (16) thereof that encloses the aperture (23), with the interposition of an elastic corrective layer (57), in particular a sealant layer (20, 21, 28), that absorbs shear forces caused by the relative movement.

9. Dishwasher according to at least one of the preceding claims, **characterised in that** a front panel (50), which in particular is resistant to washing solutions and is made of a transparent or translucent material and which covers the aperture (23) concerned, is fastened to the fixing flange (16) of the wall (7d), which fixing flange encloses the aperture (23) concerned, wherein a planar lighting element (8) is arranged on the side of said fixing flange that faces away from the washing chamber (5).

10. Dishwasher according to at least one of the preceding claims, **characterised in that** a retaining element holding the planar lighting element (8) concerned and/or a planar element (FE) associated therewith is provided, in particular a frame (59) surrounding the planar lighting element (8) and/or the planar element (FE).

11. Dishwasher according to at least one of the preceding claims, **characterised in that** a reflector film (53) that reflects light and/or thermal radiation and covers the aperture (23) concerned is arranged as a planar element on the side of the planar lighting element (8) concerned that faces away from the washing chamber (5).

12. Dishwasher according to at least one of the preceding claims, **characterised in that** the planar lighting element (8) concerned and/or a planar element (FE) associated therewith is mounted on the outer face of the wall (7d) concerned that faces away from the washing chamber (5) such that it covers from behind the aperture (23) concerned in said wall.

13. Dishwasher according to at least one of the preceding claims, **characterised in that** viewed along the width of the wall (7d) concerned is provided a row of at least two apertures (23), which are each covered or closed by a planar lighting element (8) and/or a planar element (FE) associated therewith, and/or **in that** viewed along the height of the wall (7d) is provided a row of at least two apertures (23), which are each covered or closed by a planar lighting element (8) and/or a planar element (FE) associated therewith.

## Revendications

1. Lave-vaisselle (1) comprenant une cuve de lavage (3) présentant plusieurs parois (7), délimitant un espace de lavage (5), au moins une des parois (7), notamment la paroi arrière (7d), de la cuve de lavage (4) présentant au moins deux passages (23) respectivement recouverts par un élément de surface lumineux (8) et une nervure de renforcement (9) séparant les passages l'un de l'autre, l'élément de surface lumineux (8) respectif étant formé par un élément en forme de plaque ou en forme de panneau, les éléments de surface lumineux présentant une surface totale qui correspond au moins à 20% de la surface de paroi de la paroi (7d), et au moins un élément de surface (FE) transparent, translucide ou réfléchissant, recouvrant le passage (23) respectif étant disposé sur au moins un côté de l'élément de surface lumineux (8) respectif, lesdits éléments étant séparés les uns des autres par un espace d'air (49a, 49b) dont la largeur d'espace est supérieure à 1 µm et est de maximum 2 cm.

2. Lave-vaisselle selon la revendication 1, **caractérisé en ce que** l'élément de surface lumineux (8) respectif est fixé sur un bord de la paroi (7d), entourant directement ou directement le passage (23) respectif, formant une bride de fixation (16), notamment par une liaison adhésive et/ou une fixation mécanique.

3. Lave-vaisselle selon au moins l'une quelconque des revendications précédentes, **caractérisé en ce que** les éléments de surface lumineux (8) substituent en tout au moins 50%, notamment au moins 75%, de préférence entre 80% et 95% de la surface de la paroi (7d).

4. Lave-vaisselle selon au moins l'une quelconque des revendications précédentes, **caractérisé en ce que** l'élément de surface lumineux (8) respectif est largement réalisé à surface plane, notamment à surface lisse, au moins sur sa surface de paroi intérieure (29) tournée vers l'espace de lavage (4).

5. Lave-vaisselle selon au moins l'une quelconque des revendications précédentes, **caractérisé en ce que** l'élément de surface lumineux (8) respectif est réalisé de façon à guider la lumière et/ou à irradier la lumière de manière à ce qu'un rétroéclairage, notamment largement homogène, soit fourni.

6. Lave-vaisselle selon au moins l'une quelconque des revendications précédentes, **caractérisé en ce que** l'élément de surface lumineux (8) respectif est réalisé de façon à guider la lumière et/ou à irradier la lumière de manière à ce qu'un ou plusieurs rayons de lumière (38, 45) d'au moins une source de lumière (14) disposée à l'extérieur de l'espace de lavage (5) puissent être injectés dans l'élément de surface lumineux (8) à au moins un point d'injection (39), **en ce qu'**un ou plusieurs rayons de lumière (LS1') injectés dans l'élément de surface lumineux (8, 9) sont capables d'être diffusés, en partant de leur point d'injection (39) respectif en s'éloignant avec une direction de reproduction (EFR) s'étendant parallèlement à la surface de paroi intérieure (29) de l'élément de surface lumineux (8, 9), tournée vers l'espace de lavage (5), et **en ce que** parmi l'un ou les plusieurs rayons de lumière (LS1') se reproduisant de cette façon, notamment transversalement à leur direction de reproduction (EFR), un ou plusieurs rayons de lumière (LS1), à partir de la surface de paroi intérieure (29), tournée vers l'espace de lavage (5), de l'élément de surface lumineux (8), peuvent être découplés dans l'espace de lavage (5) à un ou plusieurs points de découplage (AK) différents du point de couplage respectif (39), l'élément de surface lumineux (8) étant cependant réalisé de manière largement opaque, en vue depuis l'espace de lavage (5).

7. Lave-vaisselle selon au moins l'une quelconque des revendications précédentes, **caractérisé en ce que** l'élément de surface lumineux (8) respectif et/ou un élément de surface (FE) associé à l'élément de surface lumineux, recouvrant le passage (23) respectif, est fixé ou sont fixés sur la paroi (7d), notamment sur sa bride de fixation (16) entourant le passage respectif, de manière à ce qu'un mouvement relatif reposant sur différentes dilatations thermiques, s'étendant parallèlement au plan allant de la paroi (7d), notamment à la bride de fixation (16) entourant son passage (23) respectif, entre l'élément de surface lumineux (8) resp. l'élément de surface (FE) et la paroi (7d), notamment la bride de fixation (16) entourant son passage (23) respectif, soit compensé.

8. Lave-vaisselle selon la revendication 7, **caractérisé en ce que** l'élément de surface lumineux (8) et/ou l'élément de surface (FE), avec intercalation d'une couche de compensation (57) élastique logeant des forces de cisaillement dues au mouvement relatif, notamment une couche de mastic (20, 21, 28) est/sont relié(s) de manière adhésive à la paroi (7d), notamment à sa bride de fixation (16) entourant le passage (23) respectif.

9. Lave-vaisselle selon au moins l'une quelconque des revendications précédentes, **caractérisé en ce qu'**une plaque de revêtement (50) recouvrant le passage (23), notamment résistante au liquide de lavage, constituée d'une matière transparente ou translucide, est fixée sur la bride de fixation (16) de la paroi (7d), entourant le passage (23) respectif, un élément de surface lumineux (8) étant disposé sur son côté détourné de l'espace de lavage (5).

10. Lave-vaisselle selon au moins l'une quelconque des revendications précédentes, **caractérisé en ce qu'**un élément de maintien logeant l'élément de surface lumineux (8) respectif et/ou un élément de surface (FE) associé à celui-ci, notamment un cadre (59) comprenant l'élément de surface lumineux (8) respectif et/ou un élément de surface (FE), est ménagé.

11. Lave-vaisselle selon au moins l'une quelconque des revendications précédentes, **caractérisé en ce qu'**une feuille réfléchissante (53) réfléchissant la lumière et/ou le rayonnement thermique, recouvrant le passage (23) respectif, est disposée comme élément de surface sur le côté l'élément de surface lumineux (8) respectif, détourné de l'espace de lavage (5).

12. Lave-vaisselle selon au moins l'une quelconque des revendications précédentes, **caractérisé en ce que** l'élément de surface lumineux (8) et/ou un élément de surface (FE) associé à celui-ci est installé sur le côté extérieur de la paroi respective (7d), détourné de l'espace de lavage (5), en recouvrant par l'arrière son passage (23) respectif.

13. Lave-vaisselle selon au moins l'une quelconque des revendications précédentes, **caractérisé en ce qu'**en vue en direction en largeur de la paroi respective (7d), une série d'au moins deux passages (23) sont ménagés, qui sont recouverts ou fermés par respectivement un élément de surface lumineux (8) et/ou un élément de surface (FE) associé à celui-ci, et/ou **en ce que** en vue en direction en hauteur de la paroi (7d), une série d'au moins deux passages (23) sont ménagés, qui sont recouverts ou fermés respectivement par un élément de surface lumineux (8) et/ou un élément de surface (FE) associé à celui-ci.
